# EUROPEAN PATENT APPLICATION

(11) **EP 4 715 026 A1**
(43) Date of publication of application: **25.03.2026**
(21) Application number: 24809191.0
(22) Date of filing: 26.07.2024
(51) Int. Cl.: C09K 11/06

(54) **BORON-CONTAINING QUANTUM DOT COMPLEX AGGREGATE, PREPARATION METHOD THEREFOR, AND USE THEREOF**

(71) Applicant: Cannano Jiayuan (Guangzhou) Science & Technology Co., Ltd., Guangzhou, Guangdong 510700 (CN)
(72) Inventor: ZHU, Xiaobo, Guangzhou, Guangdong 510700 (CN); GUO, Sanwei, Guangzhou, Guangdong 510700 (CN); LIU, Tianci, Guangzhou, Guangdong 510700 (CN); PANG, Daiwen, Guangzhou, Guangdong 510700 (CN); LIU, Xiangyu, Guangzhou, Guangdong 510700 (CN)
(74) Representative: Loyer & Abello
(86) International application number: PCT/CN2024/107710
(87) International publication number: WO 2026/020440

(57) **Abstract**

The present invention belongs to the technical field of quantum dots, and specifically to a boron-containing quantum dot composite aggregate and a preparation method therefor and use thereof. The boron-containing quantum dot composite aggregate includes a tricoordinate boron-containing quantum dot composite and a tetracoordinate boron-containing quantum dot composite conforming to Formula I and Formula II formed by chemically bonding a boron-containing compound and quantum dots, wherein the boron-containing compound in the tricoordinate boron-containing quantum dot composite is linked to the quantum dots by covalent bonds, the boron-containing compound in the tetracoordinate boron-containing quantum dot composite is linked to the quantum dots by coordination bonds, and a proportion of the number of X-B coordination bonds in the boron-containing quantum dot composite aggregate is 0.10%-50% of a sum of the number of X-B covalent bonds and the number of X-B coordination bonds. The boron-containing quantum dot composite in the present invention can have relatively strong binding capacity and oxidation resistance, and good heat resistance, which facilitates improving stability of the quantum dots, meanwhile ensures excellent optical performance, and effectively avoids appearance of black and yellow spots.

## Description

### TECHNICAL FIELD

The present invention belongs to the technical field of quantum dots, and specifically to a boron-containing quantum dot composite aggregate and a preparation method therefor and use thereof.

### BACKGROUND ART

Quantum dots (QDs) are a type of crystalline nanoparticles exhibiting size-dependence due to electronic quantum confinement effects. Because of their excellent light-emitting properties (adjustable emission wavelength, high quantum yield, and narrow and symmetric emission spectrum), the quantum dots have a wide application prospect in the fields of display, illumination, solar energy and biomedical science. Currently, application of the quantum dot photoluminescence technology in LCD liquid crystal display backlights is gradually mature, and different embedding solutions such as QD on chip, QD on edge, QD on surface and QD on plate have been developed for a variety of backlight structures. However, the stability problem of the quantum dots is still one of the principal obstacles for their application in LCDs.

The quantum dot is generally composed of inorganic core and shell or a bare core and a surface ligand. As a nano material (a particle size is generally 1-30 nm), due to its large specific surface area, surface atoms easily react with water oxygen to form defects, causing significant decrease of fluorescence of the quantum dot. The surface ligand of the quantum dot binds to an inorganic surface of the quantum dot, so that the number of surface defect states caused by a dangling bond is reduced, and meanwhile, colloidal stability of the quantum dot is provided. Hence, the surface ligand of the quantum dot plays a dominant role in maintaining the colloidal property of the quantum dot and passivating the surface defects of the quantum dot.

There may be three types of surface ligands of quantum dots (Owen J. The coordination chemistry of nanocrystal surfaces. Science, 2015, 347: 614-615): L-type ligands (RNH₂ and PR₃ types providing two lone pair electrons), X-type ligands (carboxylate, phosphate, Cl⁻ etc. providing one lone pair electron) and Z-type ligands (long-chain carboxylate or phosphonate etc. capable of accepting lone pair electrons), (Z. Hens. From ligands to binding motifs and beyond; the enhanced permeability of nanocrystal surfaces. Dalton Trans., 2016, 45, 13277-13283). It is generally considered that the L-type ligands and the X-type ligands of the quantum dots bind to cations on surfaces of the quantum dots to protect metal cations (Zn, Cd and the like); the Z-type ligands bind to anions as electron acceptors to protect the anions (Se, S and the like). Nicholas Kirkwood et al., Journal of the American Chemical Society 2018 140 (46), 15712-15723, found that the improvement on a band gap energy level caused by the surface state is a main cause affecting optical and electronic properties of the quantum dots. Defect states of the quantum dots of group II-VIA and group III-VA are mainly caused by the anions on the quantum dot surfaces. The defect state caused by the anions can be well passivated using the Z-type ligands (Lewis acid), so that PLQY of the quantum dots is improved. Rahul Singh et al., ACS Applied Nano Materials 2022 5 (12), 18014-18022, found that surface treatment on CdSe/ZnS graded alloy core-shell quantum dots using the Z-type ligands (ZnCl₂, CdCl₂, etc.) confirmed that the Z-type ligands passivate the defect state of the quantum dots by bonding to surface unsaturated chalcogenide atoms, and PLQY and optical stability thereof are both significantly improved.

Currently, the strategy of improving the optical performance and stability of the quantum dots using the Z-type ligands has become an indispensable means in the field of quantum dot application. For example, US20190031952A1 and CN110205111A realizes improvement on the optical performance and stability of a quantum dot composite and a device thereof using organic thiol zinc and metal thiolate; CN115181561A realizes improvement on the stability of a quantum dot composite and a device thereof using metal carboxylate and metal phosphonate; CN112480927A realizes improvement on the stability of a quantum dot material by compounding a metal halide and an organic ligand; CN113366083A realizes improvement on the optical performance and stability of a quantum dot material using a Z-type ligand ZnCl₂; CN113710773A improves the quantum yield of InP quantum dots using zinc dioleate and metal halide; CN114341312A realizes improvement on the optical property and stability of InP/ZnSe and InP/ZnSe/ZnS quantum dots by treating the same with zinc acetate and zinc fluoride.

The above patent technologies all use the Z-type ligands of a metal salt, especially an organic metal salt (mostly using zinc salt) and a composite thereof to improve the optical property and stability of the quantum dots, but the use of such Z-type ligands is restricted to a certain extent, for example, organic thiolate is insufficient in temperature resistance (<200 °C), and is not suitable for high-temperature (210-270 °C) melt extrusion processing of a quantum dot diffuser plate; the organic carboxylate and the organic phosphonate have poor dispersibility in the processing of the PS quantum dot diffuser plate, and tend to produce black and yellow spots on a plate surface.

Although there also appear quantum dots using a boron-containing compound as a ligand in the prior art, the optical property and stability thereof are not studied in depth, and requirement of an optical diffuser plate for high stability and heat resistance of the quantum dots can hardly be met.

It should be noted that contents in this part of the present invention merely provide background art related to the present invention, but do not necessarily constitute the prior art or general common knowledge.

### SUMMARY

The present invention aims at providing a boron-containing quantum dot composite aggregate, a preparation method therefor and used thereof, to overcome the defects of poor stability and heat resistance of existing quantum dot composites in the prior art. This boron-containing quantum dot composite can have relatively strong binding capacity and oxidation resistance, and good heat resistance, which facilitates improving the stability of quantum dots, meanwhile ensures excellent optical performance, and effectively avoids appearance of black and yellow spots.

In order to achieve the above objective, in the first aspect, the present invention provides a boron-containing quantum dot composite aggregate, including a tricoordinate boron-containing quantum dot composite and a tetracoordinate boron-containing quantum dot composite formed by chemically bonding a boron-containing compound and quantum dots, wherein the boron-containing compound in the tricoordinate boron-containing quantum dot composite is linked to the quantum dots by covalent bonds, the boron-containing compound in the tetracoordinate boron-containing quantum dot composite is linked to the quantum dots by coordination bonds, and a proportion of the number of X-B coordination bonds in the boron-containing quantum dot composite aggregate is 0.10%-50% of a sum of the number of X-B covalent bonds and the number of X-B coordination bonds, where X is selected from X₁, X₂, X₃, X₄, X₅, and X₆, a chemical general formula of the tricoordinate boron-containing quantum dot composite is Formula I as follows, and a chemical general formula of the tetracoordinate boron-containing quantum dot composite is Formula II as follows:

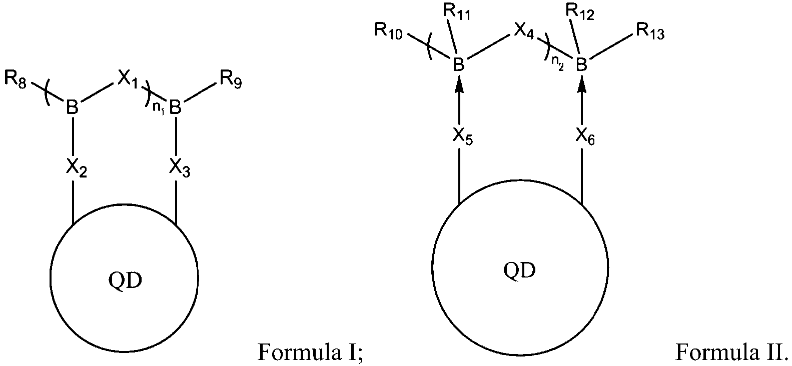

In the above, QD is a quantum dot; R₈, R₉, R₁₀, R₁₁, R₁₂, and R₁₃ are each independently selected from the group consisting of an alkoxy group, a hydrocarbyl group, a substituted hydrocarbyl group, a halogen, a carboxyl group, a hydroxyl group, an aldehyde group, an ester group, and an amide group, a substituent group in the substituted hydrocarbyl group is at least one selected from the group consisting of a halogen, a hydroxyalkyl group, an alkyl group, a hydroxyl group, an alkoxy group, a carboxyl group, an aldehyde group, an ester group, and an amide group; n₁=natural number, n₂=natural number; and X₁, X₂, X₃, X₄, X₅, and X₆ are each independently selected from a group consisting of a group VIA element, a group VA element, and a group IVA element.

In some preferred embodiments of the present invention, the boron-containing quantum dot composite aggregate is a boron-containing quantum dot dispersion liquid, and a content of a boron element in the boron-containing quantum dot dispersion liquid is 1000-9000 ppm.

In some preferred embodiments of the present invention, the boron-containing quantum dot composite aggregate is a boron-containing quantum dot composite plate, and a content of the boron element in the boron-containing quantum dot composite plate is 13-1750 ppm.

In some preferred embodiments of the present invention, X₁, X₂, X₃, X₄, X₅, and X₆ are each independently selected from the group consisting of O, S, Se, Te, N, P, As, C, Si, and Ge.

In some preferred embodiments of the present invention, X₁, X₂, X₃, X₄, X₅, and X₆ are each independently selected from O or S.

In some preferred embodiments of the present invention, R₈, R₉, R₁₀, R₁₁, R₁₂, and R₁₃ are each independently selected from the group consisting of an alkoxy group having 1-18 carbon atoms, a hydrocarbyl group having 1-18 carbon atoms, a substituted hydrocarbyl group having 1-18 carbon atoms, a halogen, a carboxyl group, a hydroxyl group, an aldehyde group, an ester group, and an amide group; and the hydrocarbyl group having 1-18 carbon atoms is selected from the group consisting of an alkyl group having 1-18 carbon atoms, an aryl group having 6-18 carbon atoms, an alkenyl group having 2-18 carbon atoms, and an alkynyl group having 2-18 carbon atoms.

In some preferred embodiments of the present invention, R₈, R₉, R₁₀, R₁₁, R₁₂, and R₁₃ are each independently selected from the group consisting of an alkoxy group having 1-18 carbon atoms, an alkyl group having 1-18 carbon atoms, an aryl group or a substituted aryl group having 6-18 carbon atoms, and a hydroxy group, wherein a substituent group in the substituted aryl group having 6-18 carbon atoms is at least one selected from the group consisting of an alkyl group, a halogen, a hydroxyalkyl group, an alkoxy group, a halogen, a carboxyl group, and an aldehyde group.

In some preferred embodiments of the present invention, R₈ and R₉ are each independently selected from the group consisting of a hydroxyl group, an alkoxy group having 1-18 carbon atoms, an alkyl group having 1-18 carbon atoms, and an aryl group or a substituted aryl group having 6-18 carbon atoms, wherein when R₈ or R₉ is selected from a substituted aryl group having 6-18 carbon atoms, then a substituent group in the substituted aryl group is at least one selected from the group consisting of an alkyl group, a hydroxyalkyl group and a halogen.

R₁₀, R₁₁, R₁₂, and R₁₃ are each independently selected from the group consisting of a hydroxyl group, an alkoxy group having 1-18 carbon atoms, an alkyl group having 1-18 carbon atoms, and an aryl group or a substituted aryl group having 6-18 carbon atoms, wherein when R₁₀, R₁₁, R₁₂ or R₁₃ is selected from a substituted aryl group having 6-18 carbon atoms, then a substituent group in the substituted aryl group is at least one selected from the group consisting of an alkoxy group, a hydroxyalkyl group, an alkyl group and a halogen. In some preferred embodiments of the present invention, the tricoordinate boron-containing quantum dot composite is at least one selected from the group consisting of:

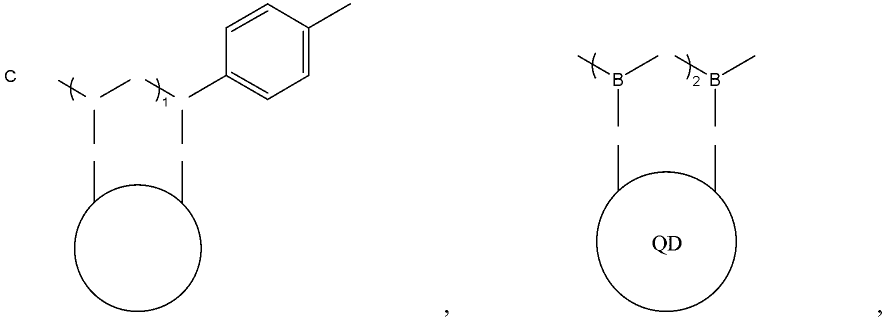

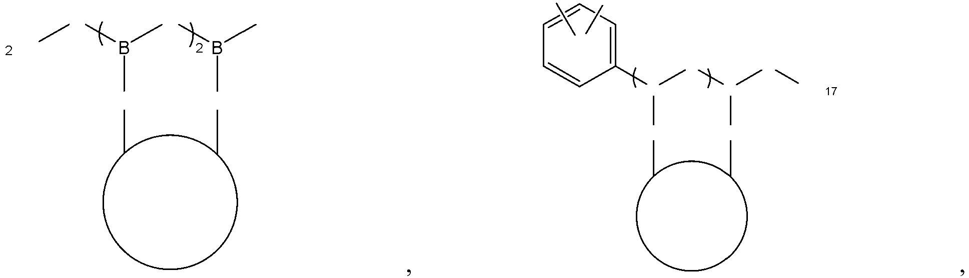

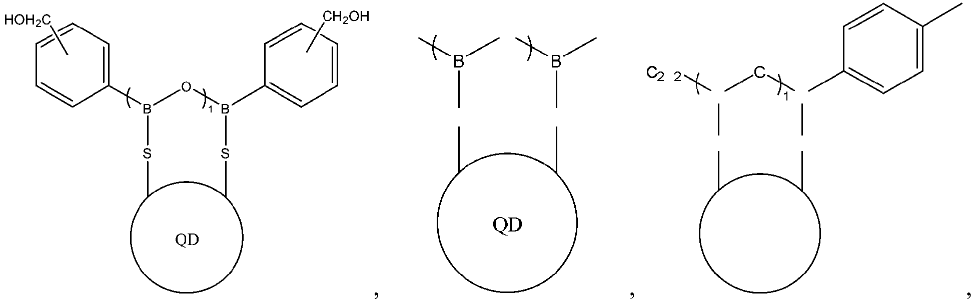

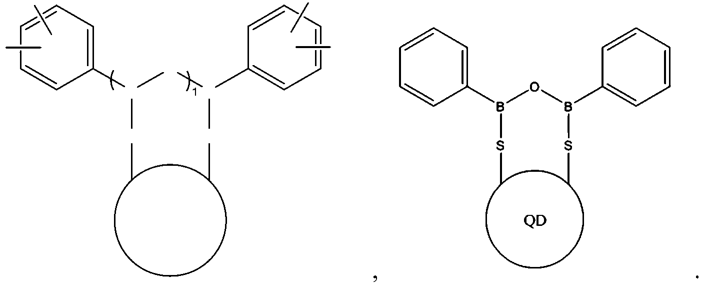

In some preferred embodiments of the present invention, the tetracoordinate boron-containing quantum dot composite is at least one selected from the group consisting of:

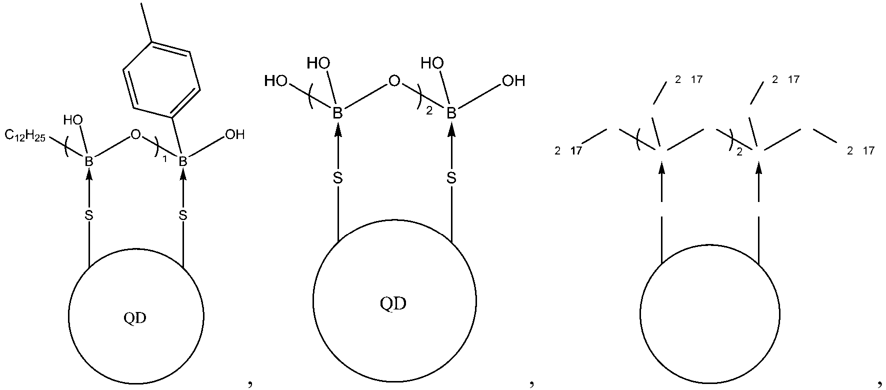

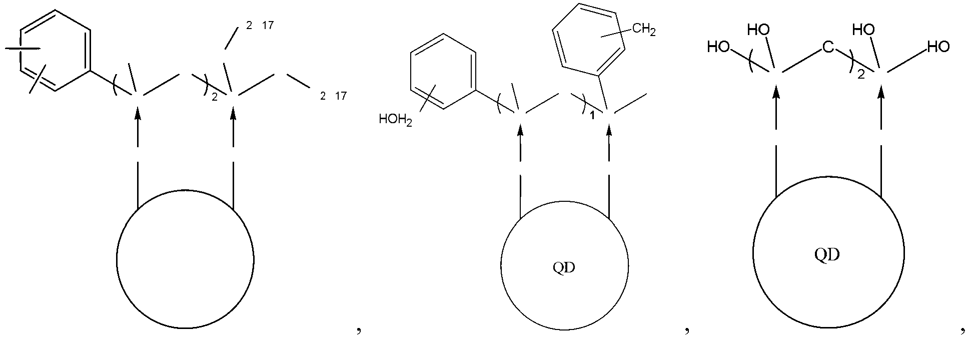

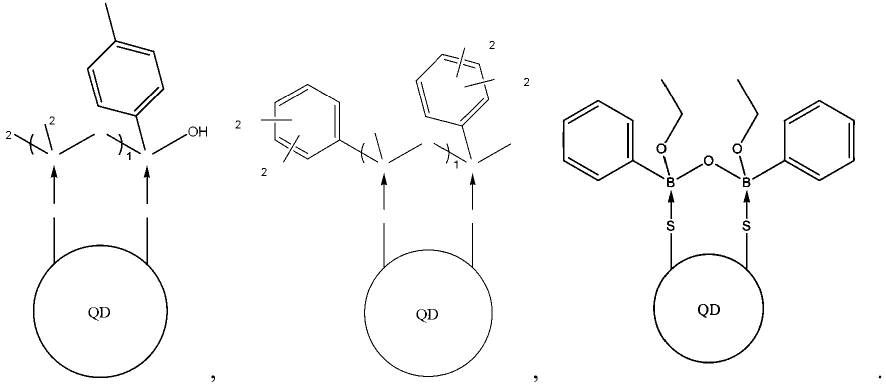

In some preferred embodiments of the present invention, the quantum dots are of a bare-core structure, and a surface of the bare-core structure has at least one of group IVA atom, group VA anion, and group VIA anion.

In some preferred embodiments of the present invention, the quantum dots are of a core-shell structure, and a surface of a shell layer of the core-shell structure has at least one of group IVA atom, group VA anion, and group VIA anion.

In the second aspect, the present invention provides a preparation method for a boron-containing quantum dot dispersion liquid, including following steps:
S1, preparing a boron-containing compound and a dispersion solvent;
S2, adding quantum dots into a system of the boron-containing compound and the dispersion solvent, and introducing an inert gas;
S3, heating, mixing and dispersing the system obtained in S2, and carrying out heat preservation reaction, in which period, forming a tricoordinate boron-containing quantum dot composite and a tetracoordinate boron-containing quantum dot composite by reacting the boron-containing compound with the quantum dots, wherein the boron-containing compound in the tricoordinate boron-containing quantum dot composite is linked to the quantum dots by covalent bonds, the boron-containing compound in the tetracoordinate boron-containing quantum dot composite is linked to the quantum dots by coordination bonds, and a proportion of the number of X-B coordination bonds in the boron-containing quantum dot dispersion liquid is 0.10%-50% of a sum of the number of X-B coordination bonds and the number of X-B covalent bonds, where X is selected from X₁, X₂, X₃, X₄, X₅, and X₆; and
S4, cooling.

In S3, a chemical general formula of the tricoordinate boron-containing quantum dot composite is Formula I as follows, and a chemical general formula of the tetracoordinate boron-containing quantum dot composite is Formula II as follows:

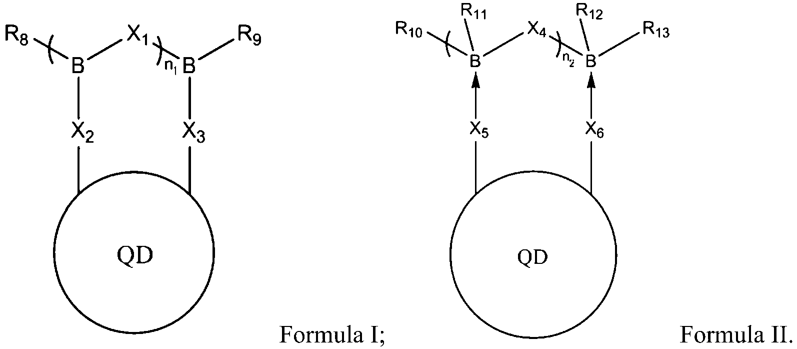

In the above, QD is a quantum dot; R₈, R₉, R₁₀, R₁₁, R₁₂, and R₁₃ are each independently selected from the group consisting of an alkoxy group, a hydrocarbyl group, a substituted hydrocarbyl group, a halogen, a carboxyl group, a hydroxyl group, an aldehyde group, an ester group, and an amide group, a substituent group in the substituted hydrocarbyl group is at least one selected from the group consisting of a halogen, a hydroxyalkyl group, an alkyl group, a hydroxyl group, an alkoxy group, a carboxyl group, an aldehyde group, an ester group, and an amide group, n₁=natural number, n₂=natural number, and X₁, X₂, X₃, X₄, X₅, and X₆ are each independently selected from a group consisting of a group VIA element, a group VA element, and a group IVA element.

In some preferred embodiments of the present invention, a content of a boron element in the boron-containing quantum dot dispersion liquid is 1000-9000 ppm.

In some preferred embodiments of the present invention, a mass ratio of the quantum dots to the boron-containing compound in S2 is 1:0.25-5, and/or a mass ratio of the boron-containing compound to the dispersion solvent in S1 is 0.01-0.5:1.

In some preferred embodiments of the present invention, the dispersion solvent in S1 includes at least one selected from the group consisting of an alkane, an aromatic hydrocarbon, an organic amine, octadecene, an organic carboxylic acid containing 1-18 carbon atoms, a liquid paraffin, an acrylic ester, an organosilane, and an organophosphine.

In some preferred embodiments of the present invention, in S3, a reaction temperature of the heat preservation reaction is higher than a melting point of the system of the boron-containing compound and the dispersion solvent, lower than a boiling point of the system of the boron-containing compound and the dispersion solvent, a reaction time is 0.1-3 h, and a stirring speed of the mixing and dispersing is 100-300 rpm.

In some preferred embodiments of the present invention, when the proportion of the covalent bonds needs to be increased, a reaction temperature in S3 is controlled to be 100-300 °C; and when the proportion of the coordination bonds needs to be increased, the reaction temperature in S3 is controlled to be 30-100 °C and not equal to 100 °C.

In some preferred embodiments of the present invention, the quantum dots are of a core-shell structure or a bare-core structure, the quantum dots are present in a form of solid or concentrate, and a mass fraction of a solid content of the quantum dots in the concentrate is 5%-50%.

In some preferred embodiments of the present invention, the boron-containing compound includes at least one of corresponding compounds of following three general formulas and dehydration condensation, esterification, and amidation derivative compounds thereof:
General Formula I, 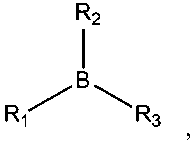 where R₁, R₂, and R₃ are each independently selected from the group consisting of a hydrocarbyl group, an alkoxy group, a halogen, and a substituted hydrocarbyl group;
General Formula II, 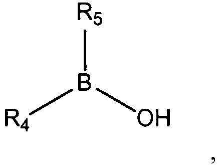 where R₄ and R₅ are each independently selected from the group consisting of a carboxyl group, a substituted hydrocarbyl group, a halogen, a hydrocarbyl group, an alkoxy group, and a hydroxyl group; and
General Formula III, 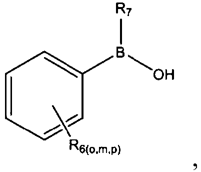 where R₆ is selected from H or the group consisting of a substituted hydrocarbyl group, a halogen, an aldehyde group, a carboxyl group, and a hydroxyalkyl group, and R₇ is selected from the group consisting of a hydrocarbyl group, an alkoxy group, a hydroxyalkyl group, and a hydroxyl group.

In the three general formulas, the substituent groups in the substituted hydrocarbyl groups are each independently at least one selected from the group consisting of a halogen, a hydroxyalkyl group, an alkyl group, a hydroxyl group, an alkoxy group, a carboxyl group, an aldehyde group, an ester group, and an amide group.

In some preferred embodiments of the present invention, the boron-containing compound at least includes General Formula III.

In some preferred embodiments of the present invention, the number of carbon atoms of any carbon-containing group in General Formula I, General Formula II and General Formula III is 18 or below, wherein the hydrocarbyl group is selected from the group consisting of an alkyl group, an aryl group, an alkenyl group, and an alkynyl group.

In the third aspect, the present invention provides a boron-containing quantum dot dispersion liquid, which is prepared by the preparation method for a boron-containing quantum dot dispersion liquid in the second aspect.

In the fourth aspect, the present invention provides a preparation method for a boron-containing quantum dot composite plate, including following steps:
S101, providing a boron-containing compound, a quantum dot concentrate, a polymer granular material, and a plate functional aid;
S102, mixing the quantum dot concentrate with at least part of the polymer granular material to render a quantum dot polymer mixture; and
S103, subjecting the quantum dot polymer mixture, the boron-containing compound, and the plate functional aid to melt extrusion to form a boron-containing quantum dot composite plate, in which period, forming a tricoordinate boron-containing quantum dot composite and a tetracoordinate boron-containing quantum dot composite by reacting the boron-containing compound with the quantum dots, wherein the boron-containing compound in the tricoordinate boron-containing quantum dot composite is linked to the quantum dots by covalent bonds, the boron-containing compound in the tetracoordinate boron-containing quantum dot composite is linked to the quantum dots by coordination bonds, and a proportion of the number of X-B coordination bonds in the boron-containing quantum dot composite plate is 0.10%-50% of a sum of the number of X-B covalent bonds and the number of X-B coordination bonds, where X is selected from X₁, X₂, X₃, X₄, X₅, and X₆.

In S3, a chemical general formula of the tricoordinate boron-containing quantum dot composite is Formula I as follows, and a chemical general formula of the tetracoordinate boron-containing quantum dot composite is Formula II as follows:

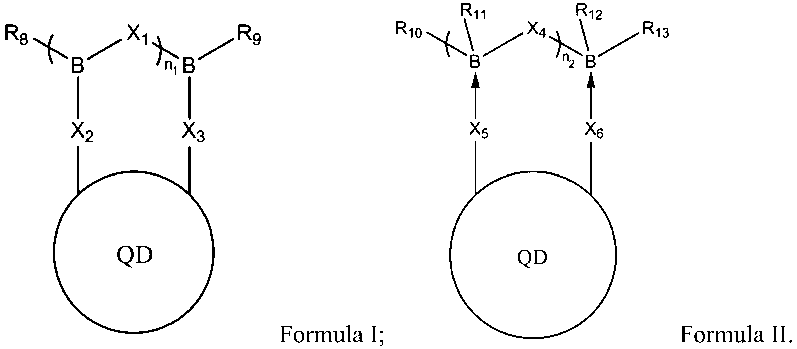

In the above, QD is a quantum dot; R₈, R₉, R₁₀, R₁₁, R₁₂, and R₁₃ are each independently selected from the group consisting of an alkoxy group, a hydrocarbyl group, a substituted hydrocarbyl group, a halogen, a carboxyl group, a hydroxyl group, an aldehyde group, an ester group, and an amide group, a substituent group in the substituted hydrocarbyl group is at least one selected from the group consisting of a halogen, a hydroxyalkyl group, an alkyl group, a hydroxyl group, an alkoxy group, a carboxyl group, an aldehyde group, an ester group, and an amide group, n₁=natural number, n₂=natural number, and X₁, X₂, X₃, X₄, X₅, and X₆ are each independently selected from a group consisting of a group VIA element, a group VA element, and a group IVA element.

In some preferred embodiments of the present invention, a content of a boron element in the boron-containing quantum dot composite plate is 13-1750 ppm.

In some preferred embodiments of the present invention, a mass ratio of the quantum dots to a total amount of the boron-containing compound is 1:0.5-40, and a mass of the boron-containing compound in the total amount of the boron-containing compound, which is used for coordination binding to other lone pair electrons or conjugated electron donors except the quantum dots in raw materials, is 1.2%-1000% of the mass of the quantum dots.

In some preferred embodiments of the present invention, a process of the melt extrusion in S103 includes: subjecting the boron-containing compound, an antioxidant, a photostabilizer, and the other part of the polymer granular material to second mixing extrusion to render an aid granular material; then feeding the quantum dot polymer mixture and the aid granular material into a first extruder, feeding a diffusion agent and a toughener into a second extruder and a third extruder respectively, and then performing melt extrusion, wherein a temperature of the second mixing extrusion is 180-220 °C.

In some preferred embodiments of the present invention, a condition of the melt extrusion in S103 includes: a processing temperature of 210-270 °C and a reaction time of 1-2 min.

In some preferred embodiments of the present invention, a stirring speed of first mixing in S102 is 300-700 rpm.

In some preferred embodiments of the present invention, the boron-containing quantum dot composite plate is a boron-containing quantum dot optical diffuser plate, and the corresponding plate functional aid includes at least one selected from the group consisting of an antioxidant, an optical diffusion agent, a toughener, and a photo stabilizer; the quantum dots include red quantum dots and/or green quantum dots, and the polymer granular material is selected from the group consisting of polystyrene, polymethyl methacrylate, polycarbonate, polyethylene, and polypropylene.

Further preferably, a thickness of the boron-containing quantum dot composite plate is 1.2-3.0 mm.

Further preferably, in S101, based on a total amount of the raw materials, a mass fraction of the boron-containing compound is 0.05%-1%, a mass fraction of the quantum dot concentrate is 0.05%-0.2%, a mass fraction of the quantum dots in the quantum dot concentrate is 5%-50%, a mass fraction of the antioxidant is 0.1%-2%, a total mass fraction of the optical diffusion agent and the toughener is 0.5%-2%, and a mass fraction of the photostabilizer is 0.05%-2%.

In some preferred embodiments of the present invention, the boron-containing compound includes at least one of corresponding compounds of following three general formulas and dehydration condensation, esterification, and amidation derivative compounds thereof:
General Formula I, 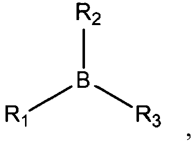 where R₁, R₂, and R₃ are each independently selected from the group consisting of a hydrocarbyl group, an alkoxy group, a halogen, and a substituted hydrocarbyl group;
General Formula II, 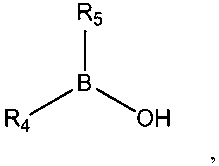 where R₄ and R₅ are each independently selected from the group consisting of a carboxyl group, a substituted hydrocarbyl group, a halogen, a hydrocarbyl group, an alkoxy group, and a hydroxyl group; and
General Formula III, 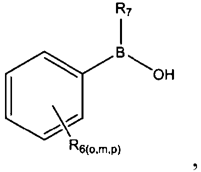 where R₆ is selected from H or the group consisting of a substituted hydrocarbyl group, a halogen, an aldehyde group, a carboxyl group, and a hydroxyalkyl group, and R₇ is selected from the group consisting of a hydrocarbyl group, an alkoxy group, a hydroxyalkyl group, and a hydroxyl group.

In the three general formulas, the substituent groups in the substituted hydrocarbyl groups are each independently at least one selected from the group consisting of a halogen, a hydroxyalkyl group, an alkyl group, a hydroxyl group, an alkoxy group, a carboxyl group, an aldehyde group, an ester group, and an amide group.

In some preferred embodiments of the present invention, the boron-containing compound at least includes General Formula III.

In some preferred embodiments of the present invention, the number of carbon atoms of any carbon-containing group in General Formula I, General Formula II, and General Formula III is 18 or below, wherein the hydrocarbyl group is selected from the group consisting of an alkyl group, an aryl group, an alkenyl group, and an alkynyl group.

In the fifth aspect, the present invention provides a boron-containing quantum dot composite plate, which is prepared by the preparation method for a boron-containing quantum dot composite plate in the fourth aspect.

In the sixth aspect, the present invention provides use of the boron-containing quantum dot composite aggregate in the first aspect in a quantum dot diffuser plate, a quantum dot light-conversion agricultural film, quantum dot On-chip package, and a quantum dot electroluminescent device.

### Beneficial Effects are as follows.

Through the above technical solutions, in particular, through the quantum dots stabilized by the boron-containing compounds, the present invention forms the tricoordinate boron-containing quantum dot composite and the tetracoordinate boron-containing quantum dot composite with suitable boron contents. As the number of valence orbits (4) of boron is more than the number of valence bond electrons (3), boron forms a planar triangular tricoordinate boron-containing quantum dot composite mainly by sp2 hybridization and retains an empty p orbit when forming a neutral compound with the quantum dots, consequently, the tricoordinate boron compound is obviously electron-deficient, and is easily attacked by an electron-rich group to form the tetracoordinate boron-containing quantum dot composite. Hence, the boron-containing compounds can bind to anions on surfaces of the quantum dots as Z-type ligands to form more stable protection therefor. The boron compounds have good heat resistance, meanwhile ensure the excellent optical performance, and effectively avoid appearance of the black and yellow spots. Moreover, the proportion of the X-B coordination bonds to the sum of the number of the X-B covalent bonds and the number of the X-B coordination bonds in the boron-containing quantum dot composite aggregate is controlled within a suitable range, thus the strong binding capacity of the tricoordinate boron-containing quantum dot composite and the strong oxidation resistance of the tetracoordinate boron-containing quantum dot composite can be fully utilized, which is more conducive to rendering strong binding capacity and oxidation resistance, better heat resistance and stability, and a longer service life, and further effectively avoids the appearance of black and yellow spots.

Compared with the quantum dot composites in the prior art, the present invention significantly improves the stability of the quantum dots. The essential principle is that the boron-containing compounds (particularly the electron-deficient tricoordinate boron-containing compound) can protect the quantum dot anions as ligands, and can form the tricoordinate boron-containing quantum dot composite and the tetracoordinate boron-containing quantum dot composite with suitable boron contents, so as to achieve the effect of improving the stability of the quantum dots. The present invention is applicable to quite broad scenarios, and can achieve the effect of improving stability in a homogeneous system, as long as the surfaces of the quantum dots bind to the boron-containing compounds provided in the present invention, no matter in what application form, and besides, the present invention can also improve the electron transmission and stability performance of quantum dot materials in the electroluminescent application.

In preferred solutions of the present invention, with regard to boron-containing quantum dot composite aggregates existing in different forms, mass contents of the boron element are controlled within respective suitable ranges, which is beneficial to improving the stability of the quantum dots, so that the boron-containing compound better protects the optical property of the quantum dots for a longer period of time, and the appearance of black and yellow spots is further effectively avoided.

### BRIEF DESCRIPTION OF DRAWINGS

In order to more clearly illustrate the technical solutions of examples of the present invention, the drawings which need to be used in the examples will be briefly introduced below. It should be understood that the drawing merely shows some examples of the present invention, and thus should not be considered as limitation to the scope. Those ordinarily skilled in the art still could obtain other relevant drawings according to these drawings, without using any inventive efforts.
FIG. 1 shows curves of changes of PLQY of quantum dot PS optical sheets prepared from green quantum dots obtained in part of the examples and comparative examples after being aged for different time.
FIG. 2 shows curves of changes of PLQY of quantum dot PS optical sheets prepared from red quantum dots obtained in part of the examples and comparative examples after being aged for different time.
FIG. 3 shows curves of changes of chromaticity coordinate x of boron-containing quantum dot optical diffuser plates obtained in part of the examples and comparative examples with different aging time.
FIG. 4 shows curves of changes of chromaticity coordinate y of boron-containing quantum dot optical diffuser plates obtained in part of the examples and comparative examples with different aging time.
FIG. 5 shows curves of changes of Lv of boron-containing quantum dot optical diffuser plates obtained in part of the examples and comparative examples with different aging time.

### DETAILED DESCRIPTION OF EMBODIMENTS

Endpoints and any value of ranges disclosed herein are not limited to the precise ranges or values, and these ranges or values should be understood as encompassing values close to these ranges or values. For numerical ranges, endpoint values of various ranges can be combined with each other, endpoint values of various ranges and individual point values can be combined with each other, and individual point values can be combined with each other, so as to obtain one or more new numerical ranges, and such numerical ranges should be construed as being specifically disclosed herein. In the above, the terms "optional" and "optionally" both mean possibly including or not (or possibly being present or possibly being not present).

In the first aspect, the present invention provides a boron-containing quantum dot composite aggregate, including a tricoordinate boron-containing quantum dot composite and a tetracoordinate boron-containing quantum dot composite formed by chemically bonding a boron-containing compound and quantum dots, wherein the boron-containing compound in the tricoordinate boron-containing quantum dot composite is linked to the quantum dots by covalent bonds, the boron-containing compound in the tetracoordinate boron-containing quantum dot composite is linked to the quantum dots by coordination bonds, and a proportion of the number of X-B coordination bonds in the boron-containing quantum dot composite aggregate is 0.10%-50% of a sum of the number of X-B covalent bonds and the number of X-B coordination bonds, where X is selected from X₁, X₂, X₃, X₄, X₅, and X₆. In the present invention, the coordination bonds and covalent bonds in appropriate proportions are used, which can enhance the protection to anions on surfaces of the quantum dots while taking into account the stability of the boron-containing quantum dot composite aggregate (wherein tricoordinate covalent binding is stronger, and tetracoordinate coordination binding is more resistant to oxidation), thus being beneficial to improving stability and lifetime of a quantum dot composite material.

In the present invention, the number of the coordination bonds and the covalent bonds can be obtained by detecting molecular absorption spectrum. Positions of characteristic peaks of molecular spectrum (including B-S covalent bonds and B-S coordination bonds) herein can be found in handbook of chemistry, which will not be repeated herein. Exemplarily, in the molecular absorption spectrum, for example, a B-O bond has a vibration frequency of 700-900 cm⁻¹ in Raman spectrum, and the B-O bond has a peak position of 1350~1310 cm⁻¹ in nuclear magnetic resonance spectrum and infrared spectrum, and the coordination number may also be determined directly by chemical shift of boron atoms using a nuclear magnetic resonance boron spectrum. Regardless of the method by which the number of the coordination bonds and the covalent bonds is detected, it is within the scope of proportions of the coordination bonds and the covalent bonds of the present invention.

In the present invention, the proportion of the X-B coordination bonds is 0.10%-50% of the sum of the number of the X-B covalent bonds and the X-B coordination bonds, for example, corresponding proportions specifically may be 0.10%, 0.5%, 0.8%, 1%, 2%, 3%, 4%, 5%, 6%, 7%, 8%, 9%, 10%, 11%, 12%, 13%, 14%, 15%, 16%, 17%, 18%, 19%, 20%, 21%, 22%, 23%, 24%, 25%, 26%, 27%, 28%, 29%, 30%, 31%, 32%, 33%, 34%, 35%, 36%, 37%, 38%, 39%, 40%, 41%, 42%, 43%, 44%, 45%, 46%, 47%, 48%, 49%, 50%, etc., and a range between any two point values, and further preferably 8%-30%.

In the above, a chemical general formula of the tricoordinate boron-containing quantum dot composite is Formula I as follows, and a chemical general formula of the tetracoordinate boron-containing quantum dot composite is Formula II as follows:

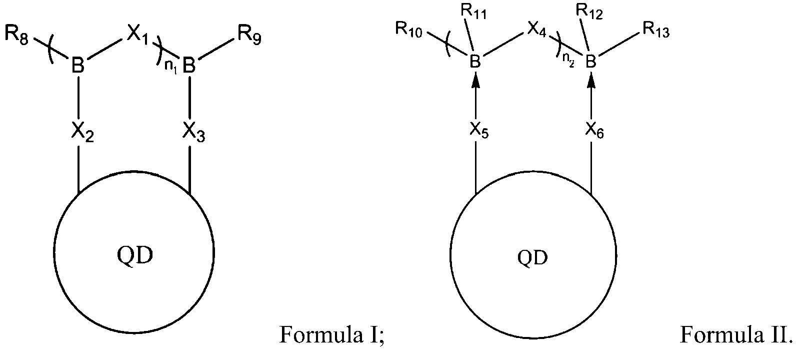

In the above, QD is a quantum dot; R₈, R₉, R₁₀, R₁₁, R₁₂, and R₁₃ are each independently selected from the group consisting of an alkoxy group, a hydrocarbyl group, a substituted hydrocarbyl group, a halogen, a carboxyl group, a hydroxyl group, an aldehyde group, an ester group, and an amide group, a substituent group in the substituted hydrocarbyl group is at least one selected from the group consisting of a halogen, a hydroxyalkyl group, an alkyl group, a hydroxyl group, an alkoxy group, a carboxyl group, an aldehyde group, an ester group, and an amide group, n₁=natural number, n₂=natural number, and X₁, X₂, X₃, X₄, X₅, and X₆ are each independently selected from a group consisting of a group VIA element, a group VA element, and a group IVA element.

In the present invention, the "hydrocarbyl group" includes an alkyl group, an aryl group, an alkenyl group, and an alkynyl group. The "substituted hydrocarbyl group" refers to a group substituted with a substituent group for a hydrogen selected from the group consisting of an alkyl group, an aryl group, an alkenyl group, and an alkynyl group. Exemplarily, the hydrocarbyl group having 1-18 carbon atoms is selected from the group consisting of an alkyl group having 1-18 carbon atoms, an aryl group having 6-18 carbon atoms, an alkenyl group having 2-18 carbon atoms, and an alkynyl group having 2-18 carbon atoms; and the substituted hydrocarbyl group having 1-18 carbon atoms is selected from the group consisting of a substituted alkyl group having 1-18 carbon atoms, a substituted aryl group having 6-18 carbon atoms, a substituted alkenyl group having 2-18 carbon atoms, and a substituted alkynyl group having 2-18 carbon atoms. The expression "having 1-18 carbon atoms" in the present invention means that the number of carbon atoms can be selected from the group consisting of 1, 2, 3, 4, 5, 6, 7, 8, 9, 10, 11, 12, 13, 14, 15, 16, 17, and 18. The expression "having 6-18 carbon atoms" means that the number of carbon atoms can be selected from the group consisting of 6, 7, 8, 9, 10, 11, 12, 13, 14, 15, 16, 17, and 18. Others are the same.

The quantum dot (QD) in the present invention may specifically be a monodisperse quantum dot particle, and may also be a quantum dot aggregate. As long as the surface of the QD contains at least one of a group VIA element, a group VA element, and a group IVA element, the tricoordinate boron-containing quantum dot composite and/or the tetracoordinate boron-containing quantum dot composite can be formed. It can be understood that X₁, X₂, X₃, X₄, X₅, and X₆ are elements contained on the surface of the quantum dot QD, respectively, so that the quantum dot can be chemically bonded to the boron-containing compound.

In the above, the natural numbers n₁ and n₂, for example, may be each independently 0, 1, 2, 3, 4, 5, 6, 7, 8, 9, 10, 20, etc. Measured values of n₁ and n₂ in the boron-containing quantum dot composite aggregate and n₁ and n₂ calculated based on theoretical values of raw materials fed are all natural numbers.

Preferably, n₁=0-20, and n₂=0-20. By using n₁ and n₂ in suitable preferred ranges, the binding force between boron-containing compound molecules and the surfaces of the quantum dots can be enhanced (more covalent or coordination binding sites) while property of a solution of the boron-containing quantum dot composite aggregate can be ensured, thus being more conducive to improving dispersity and stability of the boron-containing quantum dot composite aggregate.

In some preferred embodiments of the present invention, X₁, X₂, X₃, X₄, X₅, and X₆ are each independently selected from the group consisting of O, S, Se, Te, N, P, As, C, Si, and Ge.

In some preferred embodiments of the present invention, R₈, R₉, R₁₀, R₁₁, R₁₂, and R₁₃ are each independently selected from the group consisting of an alkoxy group having 1-18 carbon atoms, a hydrocarbyl group having 1-18 carbon atoms, a substituted hydrocarbyl group having 1-18 carbon atoms, a halogen, a carboxyl group, a hydroxyl group, an aldehyde group, an ester group, and an amide group. In the above, the hydrocarbyl group may be a straight-chain hydrocarbyl group, and may also be a branched-chain hydrocarbyl group or a cyclic hydrocarbyl group, and the effect of the present invention can be achieved as long as the above ranges, corresponding general formula structures and corresponding contents of coordination bonds and covalent bonds are satisfied.

Further preferably, R₈, R₉, R₁₀, R₁₁, R₁₂, and R₁₃ are each independently selected from the group consisting of an alkoxy group having 1-18 carbon atoms, an alkyl group having 1-18, preferably 2-16, carbon atoms, an aryl group or a substituted aryl group having 6-18 carbon atoms, and a hydroxy group.

In the above, further preferably, the substituent group in the substituted aryl group having 6-18 carbon atoms is at least one selected from the group consisting of an alkyl group, a halogen, a hydroxyalkyl group, an alkoxy group, a halogen, a carboxyl group, and an aldehyde group.

The halogen in the present invention may be selected from the group consisting of fluorine, chlorine, and bromine.

In some preferred embodiments, the boron-containing quantum dot composite aggregate is a boron-containing quantum dot composite plate, and the halogens contained in R₈, R₉, R₁₀, R₁₁, R₁₂, and R₁₃ in the boron-containing quantum dot composite aggregate are all fluorine. By means of the preferred solution of the present invention, while ensuring the improvement on the stability of the quantum dots, excellent optical performance is meanwhile ensured, and it is more conducive to further effectively avoiding the appearance of black and yellow spots.

In some preferred embodiments of the present invention, the boron-containing quantum dot composite aggregate is a boron-containing quantum dot dispersion liquid, R₈, R₉, R₁₀, and R₁₁ in the boron-containing quantum dot composite aggregate do not simultaneously contain phenyl; and/or R₈ and R₉ are not simultaneously halogens, and R₁₀ and R₁₁ are not simultaneously halogens. By means of the preferred solution of the present invention, it is more conducive to improving the stability of the quantum dots, meanwhile ensuring excellent optical performance and further effectively avoiding the appearance of black and yellow spots.

An existing form of the boron-containing quantum dot composite aggregate is not limited in any way in the present invention, and can be selected according to practical use.

In some preferred embodiments of the present invention, the boron-containing quantum dot composite aggregate is a boron-containing quantum dot dispersion liquid, and a content of a boron element in the boron-containing quantum dot dispersion liquid is 1000-9000 ppm, for example, specifically may be 1000 ppm, 1500 ppm, 2000 ppm, 2500 ppm, 3000 ppm, 3500 ppm, 4000 ppm, 4500 ppm, 5000 ppm, 5500 ppm, 6000 ppm, 6500 ppm, 7000 ppm, 7500 ppm, 8000 ppm, 8500 ppm, 9000 ppm, etc., and a range between any two point values. By using the preferably suitable content of the boron element, the boron-containing quantum dot dispersion liquid has better stability, and the boron-containing compound has a stronger protective effect on the optical property of the quantum dots.

In some preferred embodiments of the present invention, the boron-containing quantum dot composite aggregate is a boron-containing quantum dot composite plate, and a content of the boron element in the boron-containing quantum dot composite plate is 13-1750 ppm, for example, specifically may be 13 ppm, 20 ppm, 30 ppm, 40 ppm, 50 ppm, 60 ppm, 70 ppm, 80 ppm, 90 ppm, 100 ppm, 200 ppm, 300 ppm, 400 ppm, 500 ppm, 600 ppm, 700 ppm, 800 ppm, 900 ppm, 1000 ppm, 1100 ppm, 1200 ppm, 1300 ppm, 1400 ppm, 1500 ppm, 1600 ppm, 1700 ppm, 1750 ppm, etc., and a range between any two numerical values. By using the preferably suitable content of the boron element, the stability of the boron-containing quantum dot composite plate is gradually more superior, and the boron-containing compound has a stronger protective effect on the optical property of the quantum dots.

The boron-containing quantum dot composite plate in the present invention can be further conventionally prepared with a corresponding quantum dot dispersion liquid as a raw material, and can also be directly prepared with a corresponding boron-containing compound as a raw material. In the present invention, compared with the boron-containing quantum dot composite plate, as the boron-containing quantum dot dispersion liquid has a higher content of quantum dots, in order to facilitate improving the processing and treatment efficiencies, the content of the boron element may be at a higher level.

In the present invention, the tricoordinate boron-containing compound forms the tricoordinate boron-containing quantum dot composite by binding to anions (for example, elements of groups V and VI such as sulfur, selenium, oxygen, nitrogen, and phosphorus) on surfaces of the quantum dots by covalent bonds. Herein taking the surface of the quantum dot being ZnS as an example, a bonding process thereof is as follows:

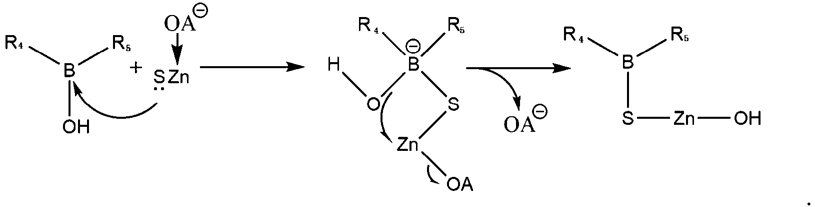

Compared with the conventional Z-type ligand, the anions adjacent to boron in the tricoordinate boron-containing quantum dot composite of the present invention have relatively strong antioxidant capacity, because empty P orbit of the tricoordinate boron and lone pair electrons of adjacent anions generate a conjugated effect. Under the influence of the conjugated effect, the electrons of the anions are less likely to be taken away by an oxidizer. The tricoordinate boron-containing quantum dot composite forms the tetracoordinate boron-containing quantum dot composite by directly binding to the lone pair electrons (such as sulfur) of the anions on the surfaces of the quantum dots by the coordination bonds, and the anions are significantly reduced in reducing capacity so that they are more difficult to be oxidized (Affected by the coordination bonds, the electrons of the anions are more difficult to be taken away by the oxidizer, which effect is stronger than the conjugated effect).

In some preferred embodiments of the present invention, the tricoordinate boron-containing quantum dot composite is at least one selected from the group consisting of:

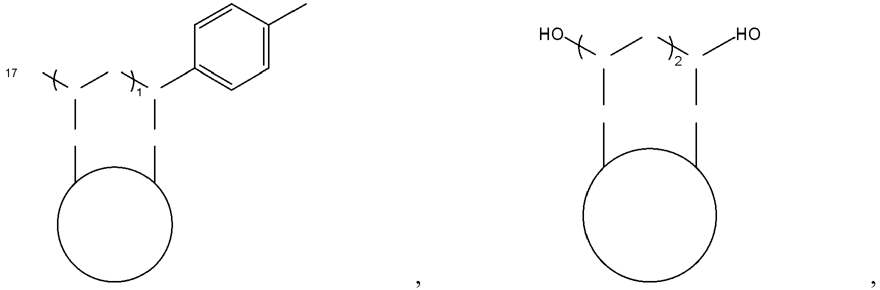

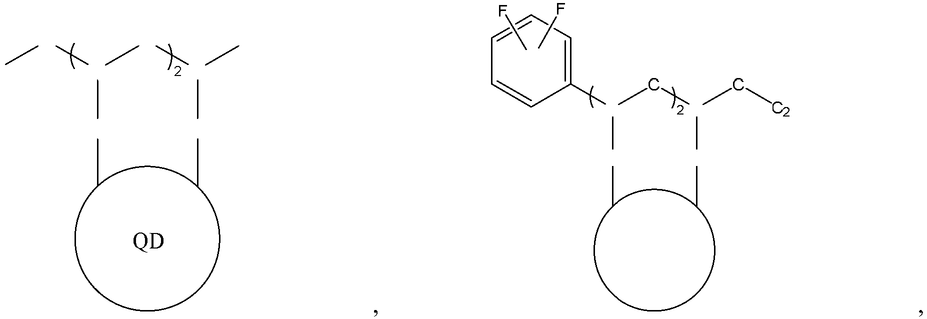

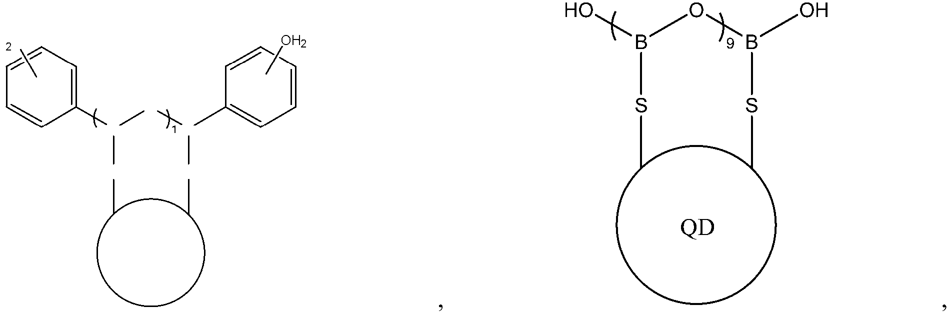

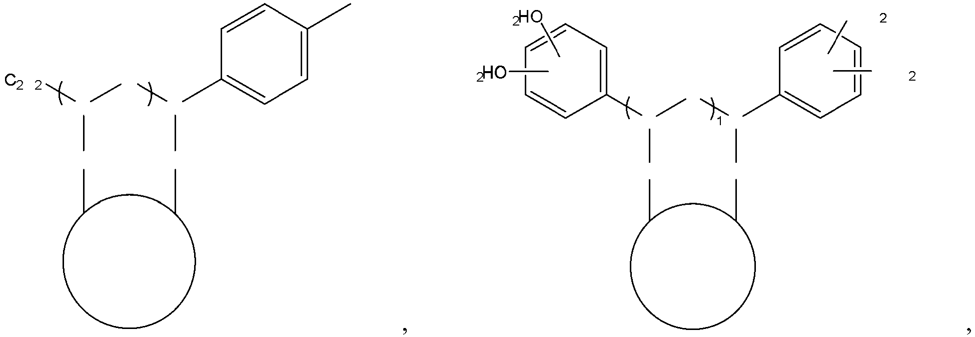

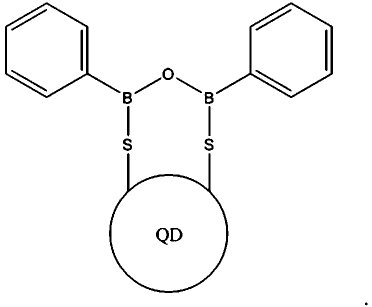

The tetracoordinate boron-containing quantum dot composite is at least one selected from the group consisting of:

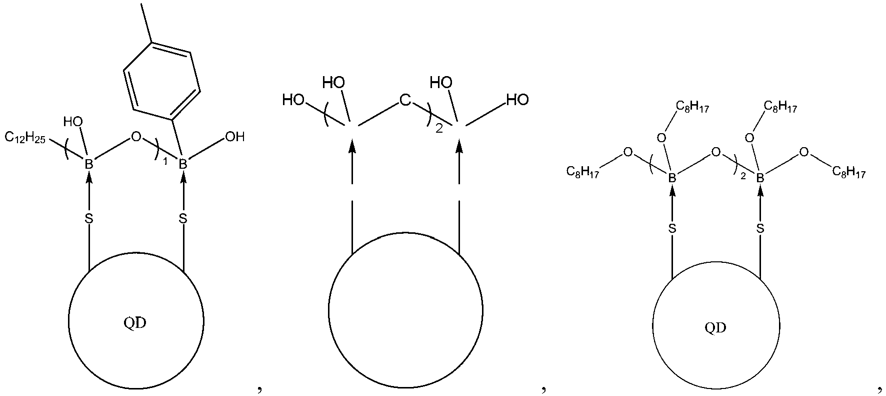

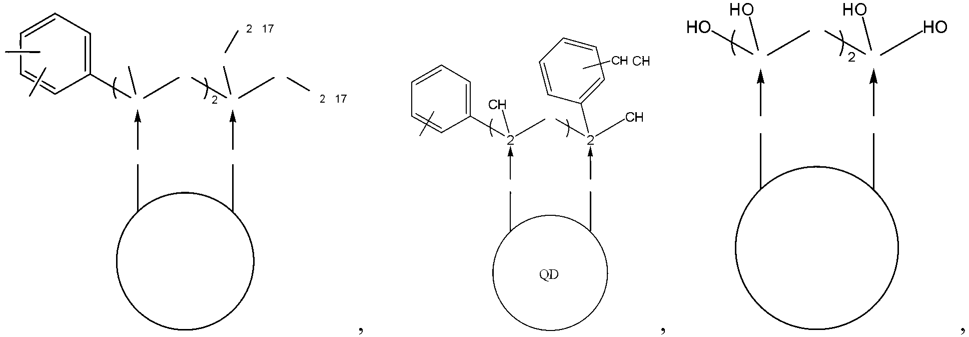

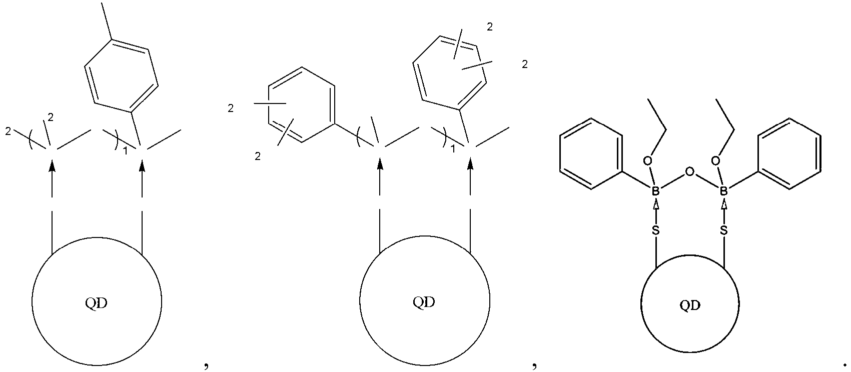

In some preferred embodiments of the present invention, the quantum dots are of a bare-core structure, and a surface of the bare-core structure has at least one of group IVA atom, group VA anion, and group VIA anion.

In some preferred embodiments of the present invention, the quantum dots are of a core-shell structure, and a surface of a shell layer of the core-shell structure has at least one of group IVA atom, group VA anion, and group VIA anion.

Any quantum dot having at least one of group IVA atom, group VA anion, and group VIA anion on the surface in the prior art can be used in the present invention, and can be chemically bonded to the boron-containing compound, to form a boron-containing quantum dot composite aggregate including a tricoordinate boron-containing quantum dot composite and a tetracoordinate boron-containing quantum dot composite.

The group VA anion and the group VIA anion on surfaces of the quantum dots, for example, may be anions corresponding to elements of groups VA and VIA, such as sulfur, selenium, oxygen, nitrogen, and phosphorus.

In some specific embodiments of the present invention, the quantum dots of a bare-core structure may be binary quantum dots (such as CdSe, CdS, ZnSe, and ZnS quantum dots), M-membered alloy quantum dots (M is a positive integer ≥ 3, and ternary, quaternary, five-membered or even higher-membered quantum dots all belong to alloy quantum dots which are obtained by mixing and alloying a variety of binary components). Exemplarily, the quantum dots of a bare-core structure may be selected from the group consisting of group IA-IVA-VIIA compound semiconductors (such as CsPdCl3), group IIIA-VA compound semiconductors (such as InP), group IVA-VIA compound semiconductors (such as PdS), group IVA-VIA-VIA compound semiconductors (such as PdSeS), group IIA-IIIA-VA compound semiconductors, group IIIA-VA-VIA compound semiconductors (such as InPS), group IIA-IIIA-VA-VIA compound semiconductors, group IIA-VIA compound semiconductors, group IIA-IIA-VIA compound semiconductors, group IIA-VIA -VIA compound semiconductors, group IIA-IIA-VIA-VIA compound semiconductors, group IA-IIIA-IVA-VIA-VIIA compound semiconductors, group IB-IIIA-VIA compound semiconductors (such as CuInS), group IB-IIIA-VIA-VIA compound semiconductors (such as CuInSeS), group IIB-VIA compound semiconductors (such as CdSe) , group IIIA-IIB-VA compound semiconductors (such as InZnP), group IIB-IIIA-VIA compound semiconductors, group IIB-IIIA-VA-VIA compound semiconductors, group IB-IIIA-VIA compound semiconductors, group IB-IIB-IIIA-VIA compound semiconductors, group IIBIIB-VIA compound semiconductors (such as ZnCdSe), group IIBIIB-VIAVIA compound semiconductors (such as ZnCdSeS), group IIB-VIAVIA compound semiconductors (such as CdSeS), group IB-IIB-IVA-VIA compound semiconductors, perovskite quantum dots, and carbon quantum dots.

In some specific embodiments of the present invention, a feasible range of core materials of the quantum dots of a core-shell structure is consistent with a feasible range of the quantum dots of a bare-core structure, and a shell material may be selected from the group consisting of an inorganic compound (such as inorganic oxide, sulphide, nitride), an organic polymer compound (such as polyamide, polystyrene), an organic silicon polymer (such as polytetramethoxysilane, polyphenyltrimethoxysilane), etc.

Further, the shell material of the quantum dots of a core-shell structure may also contain a group IIB-VIA compound (such as ZnS, ZnO), a group IIA-VIA compound (such as MgO), a group IIIA-VA compound (such as BN), a group IIIA-VIA compound (such as Al₂O₃ and B₂O₃), a group IIIA-VIA compound (such as Al₂O₃ and B₂O₃), a group IVA-VIA compound (such as SiO₂), a group IVB-VIA compound (such as ZrO₂) and a group VIIA halide metal salt compound (such as ZnCl₂).

In the above compound semiconductors of corresponding groups, elements of different groups can be arbitrarily combined, and one or more of elements of the same group can be arbitrarily combined. For example, the group IIB-VIA compound semiconductor may be a combination of one or more elements of the group IIB and one or more elements of the group VIA, and this combination may be of a bare-core structure or a core-shell structure.

Exemplarily, the quantum dots corresponding to the group IIB-VIA compound semiconductors may include, for example, a binary core shell (e.g., CdSe/CdS, CdSe/ZnS, CdSe/CdS/ZnS, CdTe/ZnS, and CdS/ZnS), a ternary core shell (e.g., CdSe/ZnS, ZnCdSe/ZnS, and CdSe/ZnS), and a quaternary core shell (e.g., ZnCdSe/ZnS and ZnCdSe/ZnS). It can be understood that CdSe/ZnS refer to a core-shell structure in which the former CdSe is a core and the latter CdS is a shell, and ZnCdSe/ZnS refers to a core-shell structure in which ZnCdSe is a core and ZnS is a shell. Others are the same.

Exemplarily, the quantum dots corresponding to the group IIB-IIIA-VIA compound semiconductors, for example, may include: CuInSe₂, CuInS₂, CuInSe₂/ZnS, CuInS₂/ZnS, and the like.

Exemplarily, the quantum dots corresponding to the group IVA-VIA compound semiconductors, for example, may include: SnS, SnSe, SnTe, PbS, PbSe, PbTe, PbSeS, PbSeTe, PbSTe, SnPbS, SnPbSe, SnPbSSe, SnPbSTe, SnPbSTe, and the like.

Exemplarily, the quantum dots corresponding to the group IB-IIB-IVA-VIA compound semiconductors may include, for example, CuZnSnSe, CuZnSnS, and the like.

Exemplarily, the quantum dots corresponding to the Group IIIA-VA compound semiconductors may include, for example, GaN, GaP, GaAs, GaSb, AlN, AlP, AlAs, AlSb, InN, InP, InAs, InSb, InP/ZnS, InP/ZnSe/ZnS, and the like.

The boron-containing quantum dot composite aggregate of the present invention may exist in any form, for example, in a form of a solution, or in a form of a plate material.

In the present invention, structures of the tricoordinate boron-containing quantum dot composite and the tetracoordinate boron-containing quantum dot composite in the boron-containing quantum dot composite aggregate can be tested by a nuclear magnetic resonance ¹¹B spectrum, a synchronous radiation absorption spectrum, an infrared characteristic absorption spectrum of covalent bond and other absorption spectra. These testing means are all prior art, and will not be repeated herein.

In the second aspect, the present invention provides a preparation method for a boron-containing quantum dot dispersion liquid, including following steps:
S1, preparing a boron-containing compound and a dispersion solvent;
S2, adding quantum dots into a system of the boron-containing compound and the dispersion solvent, and introducing an inert gas;
S3, heating, mixing and dispersing the system obtained in S2, and carrying out heat preservation reaction, in which period, forming a tricoordinate boron-containing quantum dot composite and a tetracoordinate boron-containing quantum dot composite by reacting the boron-containing compound with the quantum dots, wherein the boron-containing compound in the tricoordinate boron-containing quantum dot composite is linked to the quantum dots by covalent bonds, the boron-containing compound in the tetracoordinate boron-containing quantum dot composite is linked to the quantum dots by coordination bonds, and a proportion of the number of X-B coordination bonds in the boron-containing quantum dot dispersion liquid is 0.10%-50% of a sum of the number of X-B coordination bonds and the number of X-B covalent bonds, where X is selected from X₁, X₂, X₃, X₄, X₅, and X₆; and
S4, cooling.

In S3, a chemical general formula of the tricoordinate boron-containing quantum dot composite is Formula I as follows, and a chemical general formula of the tetracoordinate boron-containing quantum dot composite is Formula II as follows:

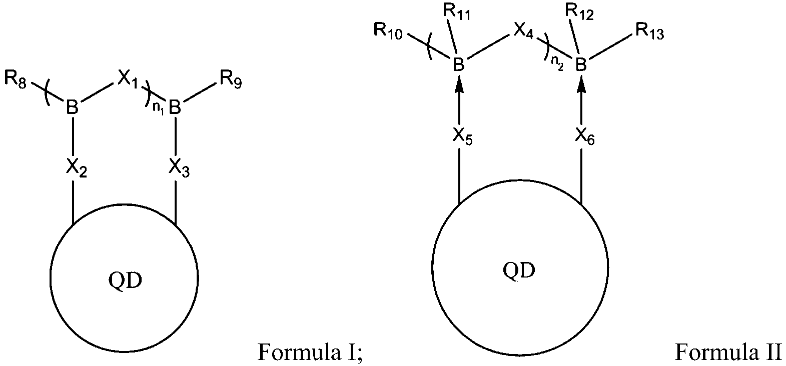

In the above, QD is a quantum dot; R₈, R₉, R₁₀, R₁₁, R₁₂, and R₁₃ are each independently selected from the group consisting of an alkoxy group, a hydrocarbyl group, a substituted hydrocarbyl group, a halogen, a carboxyl group, a hydroxyl group, an aldehyde group, an ester group, and an amide group, a substituent group in the substituted hydrocarbyl group is at least one selected from the group consisting of a halogen, a hydroxyalkyl group, an alkyl group, a hydroxyl group, an alkoxy group, a carboxyl group, an aldehyde group, an ester group, and an amide group; n₁=natural number, n₂=natural number; and X₁, X₂, X₃, X₄, X₅, and X₆ are each independently selected from a group consisting of a group VIA element, a group VA element, and a group IVA element.

Preferably, a content of a boron element in the boron-containing quantum dot dispersion liquid is 1000-9000 ppm.

In some preferred embodiments of the second aspect of the present invention, in S2, a mass ratio of the quantum dots to the boron-containing compound is 1:0.25-5. By means of this preferred solution, the effect of directly binding the quantum dots to the boron-containing compound by the covalent bonds can be enhanced, thus being more conducive to increasing the proportion of the tricoordinate boron-containing quantum dot composite.

In some preferred embodiments of the second aspect of the present invention, in S1, a mass ratio of the boron-containing compound to the dispersion liquid is 0.01-0.5:1. By means of this preferred solution, while the dispersion of the boron-containing compound can be facilitated, the coupling effect between boron-containing compounds is enhanced (values of the natural numbers of n₁ and n₂ are larger), thus being more conducive to improving the structural stability of the tricoordinate and tetracoordinate boron-containing quantum dot composites (because there are more binding sites between B-X, which is more secure).

In some preferred embodiments of the second aspect of the present invention, the dispersion solvent in S1 includes at least one of an alkane, an aromatic hydrocarbon, an organic amine, octadecene, an organic carboxylic acid containing 1-18 carbon atoms, a liquid paraffin, an acrylic ester, an organosilane, and an organophosphine. The organic carboxylic acid containing 1-18 carbon atoms can be selected from octanoic acid, oleic acid, linoleic acid, stearic acid, and the like.

In some preferred embodiments of the second aspect of the present invention, a reaction temperature of the heat preservation reaction in S3 is higher than a melting point of the system of the boron-containing compound and the dispersion solvent, lower than a boiling point of the system of the boron-containing compound and the dispersion solvent, and a reaction time is 0.1-3 h. By means of this preferred solution, while the solvent can be in a liquid state, the solvent is prevented from volatilizing due to a too high reaction temperature, thus being more conducive to improving a reaction degree.

Preferably, a stirring speed of the mixing and dispersing is 100-300 rpm. By this preferred solution, materials can be prevented from splashing and hanging on a wall, thus being more conducive to improving uniformity of the reaction.

In the S3 of the present invention, the reaction temperature of the heat preservation reaction can be determined according to proportions of the covalent bonds and the coordination bonds to be formed, for example, the reaction temperature can be in a high temperature range of 100-300 °C, preferably 100-230 °C, which facilitates formation of the covalent bonds, and can also be in a low temperature range of 30-100 °C and not equal to 100 °C, which facilitates formation of the coordination bonds.

In some preferred embodiments of the second aspect of the present invention, when the proportion of the covalent bonds needs to be increased, the reaction temperature in S3 is controlled to be 100-300 °C, preferably 100-230 °C; when the proportion of the coordination bonds needs to be increased, the reaction temperature in S3 is controlled to be 30-100 °C and not equal to 100 °C. By this preferred solution, the proportions of the covalent bonds and the coordination bonds can be adjusted more quickly and accurately.

In some preferred embodiments of the second aspect of the present invention, the quantum dots are of a core-shell structure or a bare-core structure, the quantum dots are present in a form of solid or concentrate, and a mass fraction of the quantum dots in the concentrate is 5%-50%. By this preferred solution, while being capable of ensuring homogeneous phase of a system solution, concentration of reactants (quantum dots) can be increased as much as possible, thus being more conducive to improving efficiency of processing the boron-containing quantum dot dispersion liquid.

In the solution where the quantum dots are present in the form of a concentrate, the solvent in the concentrate may be, for example, at least one of an alkane (such as hexane, octane, liquid paraffin, and octadecene), an aromatic hydrocarbon (such as toluene), an organic amine (such as trioctylamine), an organic carboxylic acid (such as oleic acid) containing 1-18 carbon atoms, an organic ester (such as acrylate), an organosilane (such as mercaptopropyltrimethoxysilane), and an organophosphine (such as trioctylphosphine). Those skilled in the art could select the solvent in the concentrate according to practical requirements.

In some preferred embodiments of the second aspect of the present invention, the boron-containing compound includes at least one of corresponding compounds of following three general formulas and dehydration condensation, esterification, and amidation derivative compounds thereof:
General Formula I, 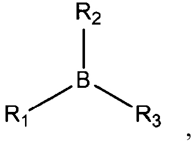 where R₁, R₂, and R₃ are each independently selected from the group consisting of a hydrocarbyl group, an alkoxy group, a halogen, and a substituted hydrocarbyl group;
General Formula II, 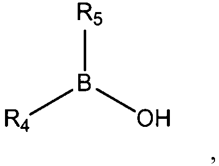 where R₄ and R₅ are each independently selected from the group consisting of a carboxyl group, a substituted hydrocarbyl group, a halogen, a hydrocarbyl group, an alkoxy group, and a hydroxyl group;
General Formula III, 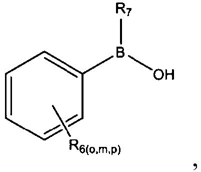 where R₆ is selected from H or the group consisting of a substituted hydrocarbyl group, a halogen, an aldehyde group, a carboxyl group, and a hydroxyalkyl group, and R₇ is selected from the group consisting of a hydrocarbyl group, an alkoxy group, a hydroxyalkyl group, and a hydroxyl group. In the three general formulas, the substituent groups in the substituted hydrocarbyl groups are each independently at least one selected from the group consisting of halogen, a hydroxyalkyl group, an alkyl group, a hydroxyl group, an alkoxy group, a carboxyl group, an aldehyde group, an ester group, and an amide group. In the above, the hydrocarbyl group may be a straight-chain hydrocarbyl group, and may also be a branched-chain hydrocarbyl group or a cyclic hydrocarbyl group, and the effect of the present invention can be achieved as long as the above ranges, corresponding general formula structures and mass contents of corresponding coordination boron-containing quantum dot composites.

It can be understood that the boron-containing compound may comply with one of the above three general formulas, and may also comply with more than one of the above three general formulas, for example, the boron-containing compound may include at least one compound of General Formula I, at least one compound of General Formula II, and at least one compound of General Formula III.

It can be understood that the hydrocarbyl group is selected from the group consisting of an alkyl group, an aryl group, an alkenyl group, and an alkynyl group.

In some preferred embodiments of the present invention, the boron-containing compound at least includes General Formula III, which is more conducive to improving its protection on anions by enhancing the electron-withdrawing effect of boron through an induction effect, while improving its dispersibility in a polymer substrate (such as polystyrene (PS)).

In some preferred embodiments of the second aspect of the present invention, the number of carbon atoms of any carbon-containing group in General Formula I, General Formula II and General Formula III is 18 or below.

Further preferably, in General Formula II, R₄ is selected from the group consisting of a carboxyl group, a substituted hydrocarbyl group, an allyl group, an aryl group, and a hydroxyl group, and R₅ is selected from the group consisting of an alkoxy group, a hydroxyl group, a hydroxyalkyl group, and a hydrocarbyl group.

In the above, R₆ can be one or more selected from the preceding ranges, and R₆ with different groups can be distributed at different positions of benzene ring in General Formula III. In some more preferred embodiments of the second aspect of the present invention, in General Formula III, the position of the group of R₆ is a meta-position m or a para-position p, which is more conducive to an electron-withdrawing group to enhance an electron-trapping capacity of an empty orbit of boron atom, and further improves the anti-oxidation effect of the tetracoordinate boron quantum dot composite bonded by the coordination bonds.

In some specific embodiments of the present invention, the boron-containing compound is selected from following compounds:

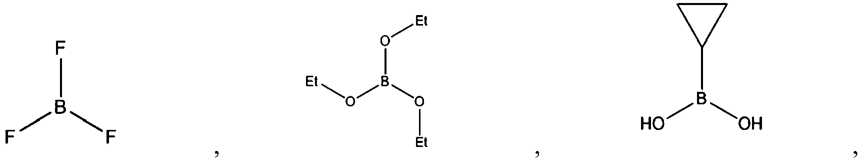

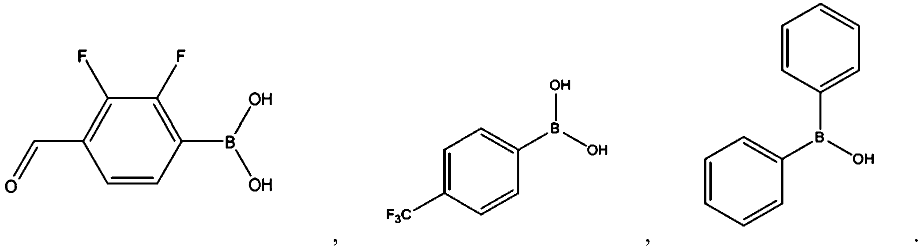

In the second aspect, the boron-containing compound in a preferred range is used, which is more conducive to dissolution and dispersion of the boron-containing compound in a high-concentration quantum dot solution, and enhances a covalent binding capacity to the surfaces of the quantum dots.

In the preparation method in the second aspect of the present invention, the proportions of the coordination bonds and the covalent bonds can be adjusted and controlled by adjusting conditions such as time and temperature of the heat preservation reaction of the boron-containing compound.

In the third aspect, the present invention provides a boron-containing quantum dot dispersion liquid, which is prepared by the preparation method for a boron-containing quantum dot dispersion liquid in the second aspect.

In the fourth aspect, the present invention provides a preparation method for a boron-containing quantum dot composite plate, including following steps:
S101, providing a boron-containing compound, a quantum dot concentrate, a polymer granular material, and a plate functional aid;
S102, mixing the quantum dot concentrate with at least part of the polymer granular material to render a quantum dot polymer mixture;
S103, subjecting the quantum dot polymer mixture, the boron-containing compound, and the plate functional aid to melt extrusion to form a boron-containing quantum dot composite plate, in which period, forming a tricoordinate boron-containing quantum dot composite and a tetracoordinate boron-containing quantum dot composite by reacting the boron-containing compound with the quantum dots, wherein the boron-containing compound in the tricoordinate boron-containing quantum dot composite is linked to the quantum dots by covalent bonds, the boron-containing compound in the tetracoordinate boron-containing quantum dot composite is linked to the quantum dots by coordination bonds, and a proportion of the number of X-B coordination bonds in the boron-containing quantum dot composite plate is 0.10%-50% of a sum of the number of X-B covalent bonds and the number of X-B coordination bonds, where X is selected from X₁, X₂, X₃, X₄, X₅, and X₆.

In S3, a chemical general formula of the tricoordinate boron-containing quantum dot composite is Formula I as follows, and a chemical general formula of the tetracoordinate boron-containing quantum dot composite is Formula II as follows:

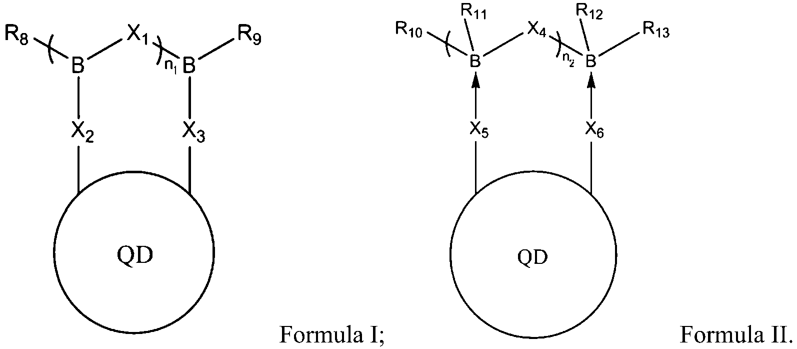

In the above, QD is a quantum dot; R₈, R₉, R₁₀, R₁₁, R₁₂, and R₁₃ are each independently selected from the group consisting of an alkoxy group, a hydrocarbyl group, a substituted hydrocarbyl group, a halogen, a carboxyl group, a hydroxyl group, an aldehyde group, an ester group, and an amide group, a substituent group in the substituted hydrocarbyl group is at least one selected from the group consisting of a halogen, a hydroxyalkyl group, an alkyl group, a hydroxyl group, an alkoxy group, a carboxyl group, an aldehyde group, an ester group, and an amide group, n₁=natural number, n₂=natural number, and X₁, X₂, X₃, X₄, X₅, and X₆ are each independently selected from a group consisting of a group VIA element, a group VA element, and a group IVA element.

Preferably, a content of a boron element in the boron-containing quantum dot composite plate is 13-1750 ppm.

In some preferred embodiments of the fourth aspect of the present invention, a mass ratio of the quantum dots to a total amount of the boron-containing compound is 1:(0.5-40).

Further preferably, a mass of the boron-containing compound in the total amount of the boron-containing compound, which is used for coordination binding to other lone pair electrons or conjugated electron donors except the quantum dots in raw materials, is 1.2%-1000% of the mass of the quantum dots. By this preferred solution, it can bind to Lewis base (electron donor) other than the quantum dots while being capable of protecting the anions on the surfaces of the quantum dots, so as to be more conducive to improving the thermal conductivity and antioxidant capacity of the plate material through the boron-containing compound.

In the above, it is used to bind to lone pair electrons or conjugated electron donors other than quantum dots in the raw materials, such as antioxidant, photo stabilizer, elements of groups V and VI on hindered amine, and benzene ring, olefin, and acetylenic hydrocarbon.

In some preferred embodiments of the fourth aspect of the present invention, a condition of the melt extrusion in S103 includes: a processing temperature of 210-270 °C and a reaction time of 1-2 min.

In some preferred embodiments of the fourth aspect of the present invention, the stirring speed of the first mixing in S102 is 300-700 rpm.

The boron-containing quantum dot composite plate of the present invention can be used in various quantum dot application fields, and the corresponding plate functional aid and polymer granular material can be selected according to different application fields. In some preferred embodiments of the fourth aspect of the present invention, the boron-containing quantum dot composite plate is a boron-containing quantum dot optical diffuser plate, and the corresponding plate functional aid includes at least one of an antioxidant, an optical diffusion agent, a toughener, and a photostabilizer. In the above, the raw materials except the boron-containing compound and the quantum dots are all common additives in conventional common diffuser plates, and in order to ensure balanced performance of processed products, amounts of various common additives can be obtained with reference to corresponding ranges in the prior art.

Further preferably, a process of the melt extrusion in S103 includes: subjecting the boron-containing compound, an antioxidant, a photostabilizer, and the other part of the polymer granular material to second mixing extrusion to render an aid granular material; then feeding the quantum dot polymer mixture and the aid granular material into a first extruder, feeding a diffusion agent and a toughener into a second extruder and a third extruder respectively, and then performing melt extrusion. Further preferably, a temperature of the second mixing extrusion is 180-220 °C.

Further preferably, in S101, based on a total amount of the raw materials, a mass fraction of the boron-containing compound is 0.05%-1%, a mass fraction of the quantum dot concentrate is 0.05%-0.2%, a mass fraction of the quantum dots in the quantum dot concentrate is 5%-50%, a mass fraction of the antioxidant is 0.1%-2%, a total mass fraction of the optical diffusion agent and the toughener is 0.5%-2%, and a mass fraction of the photostabilizer is 0.05%-2%. By this preferred solution, it is more conducive to the balanced performance of the produced quantum dot diffuser plate, and requirements of production line processing and product service life are met.

Preferably, the quantum dots include red quantum dots and/or green quantum dots.

Preferably, the polymer granular material is selected from the group consisting of polystyrene, polymethylmethacrylate, polycarbonate, polyethylene, and polypropylene.

In the above, preferably, a thickness of the boron-containing quantum dot composite plate is 1.2-3.0 mm. The suitable thin boron-containing quantum dot composite plate is more conducive to reducing the amount of substrate in the plate and reducing costs of raw materials while providing certain mechanical strength and optical path.

An optional range of the boron-containing compound in the fourth aspect of the present invention is the same as that of the boron-containing compound in the second aspect, which is not repeated herein.

The selection of the boron-containing compound in the methods in the second aspect and the fourth aspect of the present invention can be made depending on whether facilitating chemical bonding or not. Preferably, in the preparation of the dispersion liquid in the second aspect of the present invention, as the mass fraction of the quantum dots is relatively high (for example, accounting for 10%), a structure of the selected boron-containing compound only needs to have relatively high solubility in the system so as to match the amount of high-concentration quantum dots and facilitate the chemical bonding. Further preferably, a boron-containing compound having a hydroxyl group and/or an alkoxy group is further preferred, which can further form a stronger tricoordinate structure with the surfaces of the quantum dots by utilizing hydrolysis of the alkoxy group and binding capacity of the hydroxyl group.

However, in the preparation of the composite plate in the fourth aspect of the present invention, the mass fraction of the quantum dots is relatively low (for example, accounting for 0.1%), and at the same time, the range of the substrate of the composite plate is relatively fixed, such as PS, PMMA, and PC; therefore, the boron-containing compound should be more compatible with a chemical environment of the diffuser plate, for example, the polystyrene substrate preferably contains a boron-containing compound with an alkyl group or an aryl group , which facilitates the chemical bonding. Further preferably, the boron-containing compound with an alkyl group and/or an aryl group can improve the dispersibility in the PS substrate by utilizing the hydrophobicity of the alkyl group and/or the aryl group, and form a more oxidation-resistant tetracoordinate structure with the surfaces of the quantum dots.

In the preparation of the composite plate in the fourth aspect of the present invention, the proportions of the coordination bonds and the covalent bonds can be adjusted and controlled by adjusting conditions such as the temperature of the second mixing extrusion, the extrusion temperature of the melt extrusion, an extrusion speed, and an extrusion time.

In the fifth aspect, the present invention provides a boron-containing quantum dot composite plate, which is prepared by the preparation method for a boron-containing quantum dot composite plate in the fourth aspect.

Compared with the conventional method for preparing a quantum dot PS optical sheet directly using a quantum dot concentrate, the present invention uses the method for directly preparing the boron-containing quantum dot composite plate with the boron-containing compound, and the obtained boron-containing quantum dot composite plate has better stability and product aging performance.

In the sixth aspect, the present invention provides use of the boron-containing quantum dot composite aggregate in the first aspect in a quantum dot diffuser plate, a quantum dot light-conversion agricultural film, quantum dot On-chip package, and a quantum dot electroluminescent device.

The examples of the present invention described in detail below are illustrative, merely used for explaining the present invention, but should not be construed as limitation to the present invention.

### 1. Preparation of a boron-containing quantum dot dispersion liquid:

### Example 1

200 g of decane, 10 g of dodecylboronic acid, 2 g of 4-methylphenylboronic acid, and 2 g of oleic acid were placed in a 500 mL four-necked agitated reactor with a condensation reflux device. Argon was introduced and stirring was started (at a rotation speed of 100 rpm). 20 g of a red CdSe/CdS/ZnS core-shell quantum dot solid (Em (i.e., emission wavelength) = 625 nm, Fwhm (i.e., full width at half-maximum) = 23 nm) was added into system. After the quantum dot solid was dispersed, the system was heated to 160 °C (i.e., reaction temperature), heat preservation reaction was carried out for 2 h, and then the system was cooled to 30 °C, to render a uniform boron-containing quantum dot dispersion liquid.

### Example 2

200 g of tri-n-octylamine, 10 g of boric acid, and 20 g of oleic acid were placed in a 500 mL four-necked agitated reactor with a condensation reflux device. Argon was introduced and stirring was started (at a rotation speed of 200 rpm). 20 g of a red CdSe/CdS/ZnS core-shell quantum dot solid (Em=625 nm, Fwhm=23 nm) was added into system. After the quantum dot solid was dispersed, the system was heated to 220 °C, heat preservation reaction was carried out for 2 h, and then the system was cooled to 30 °C, to render a uniform boron-containing quantum dot dispersion liquid.

### Example 3

200 g of octane, 10 g of trioctyl borate, 1 g of boric acid, and 2 g of oleic acid were placed in a 500 mL four-necked agitated reactor with a condensation reflux device. Argon was introduced and stirring was started (at a rotation speed of 100 rpm). 20 g of a green CdSe/CdS/ZnS core-shell quantum dot solid (Em=538 nm, Fwhm=23 nm) was added into system. After the quantum dot solid was dispersed, the system was heated to 1000 °C, heat preservation reaction was carried out for 2 h, and then the system was cooled to 30 °C, to render a uniform boron-containing quantum dot dispersion liquid.

In the above, an appropriate amount of oleic acid can increase polarity of a mixed solvent formed by octane and oleic acid, facilitate dissolution, and meanwhile function to disperse ligands on surfaces of solid quantum dots to some extent.

### Example 4

200 g of liquid paraffin, 10 g of difluorophenylboronic acid, 2 g of trioctyl borate, and 2 g of oleic acid were placed in a 500 mL four-necked agitated reactor with a condensation reflux device. Argon was introduced and stirring was started (at a rotation speed of 100 rpm). 20 g of a green CdSe/CdS/ZnS core-shell quantum dot solid (Em=538 nm, Fwhm=23 nm) was added into system. After the quantum dot solid was dispersed, the system was heated to 230 °C, heat preservation reaction was carried out for 2 h, and then the system was cooled to 30 °C, to render a uniform boron-containing quantum dot dispersion liquid.

### Example 5

100 g of trimethoxyphenylsilane, 100 g of trimethoxy dodecyl silane, 10 g of hydroxymethylphenylboronic acid, and 2 g of oleic acid were placed in a 500 mL four-necked agitated reactor with a condensation reflux device. Argon was introduced and stirring was started (at a rotation speed of 100 rpm). 20 g of a green CdSe/CdS/ZnS core-shell quantum dot solid (Em=538 nm, Fwhm=23 nm) was added into system. After the quantum dot solid was dispersed, the system was heated to 180 °C, heat preservation reaction was carried out for 1 h, and then the system was cooled to 30 °C, to render a uniform boron-containing quantum dot dispersion liquid.

### Example 6

200 g of trioctylphosphine, 10 g of trioctyl borate, and 2 g of boric acid were placed in a 500 mL four-necked agitated reactor with a condensation reflux device. Argon was introduced and stirring was started (at a rotation speed of 100 rpm). 20 g of a green CdSe/CdS/ZnS core-shell quantum dot solid (Em=538 nm, Fwhm=23 nm) was added into system. After the quantum dot solid was dispersed, the system was heated to 200 °C, heat preservation reaction was carried out for 2 h, and then the system was cooled to 30 °C, to render a uniform boron-containing quantum dot dispersion liquid.

### Example 7

200 g of octane, 10 g of boric acid, and 2 g of diisooctylphosphinic acid were placed in a 500 mL four-necked agitated reactor with a condensation reflux device. Argon was introduced and stirring was started (at a rotation speed of 100 rpm). 20 g of a red CdSe/CdS/ZnS core-shell quantum dot solid (Em=625 nm, Fwhm=23 nm) was added into system. After the quantum dot solid was dispersed, the system was heated to 110 °C, heat preservation reaction was carried out for 2 h, and then the system was cooled to 30 °C, to render a uniform boron-containing quantum dot dispersion liquid.

### Example 8

200 g of toluene, 10 g of tributyl borane, and 2 g of 4-methylphenylboronic acid were placed in a 500 mL four-necked agitated reactor with a condensation reflux device. Argon was introduced and stirring was started (at a rotation speed of 100 rpm). 20 g of a green CdSe/CdS/ZnS core-shell quantum dot solid (Em=538 nm, Fwhm=23 nm) was added into system. After the quantum dot solid was dispersed, the system was heated to 200 °C, heat preservation reaction was carried out for 2 h, and then the system was cooled to 30 °C, to render a uniform boron-containing quantum dot dispersion liquid.

### Example 9

200 g of isobornyl methacrylate, 10 g of dimethoxyphenylboronic acid, and 2 g of oleic acid were placed in a 500 mL four-necked agitated reactor with a condensation reflux device. Argon was introduced and stirring was started (at a rotation speed of 100 rpm). 20 g of a red CdSe/CdS/ZnS core-shell quantum dot solid (Em=625 nm, Fwhm=23 nm) was added into system. After the quantum dot solid was dispersed, the system was heated to 180 °C, heat preservation reaction was carried out for 2 h, and then the system was cooled to 30 °C, to render a uniform boron-containing quantum dot dispersion liquid.

### Example 1-a

Example 1-a is carried out with reference to Example 1, and is different in making proportions of B-X covalent bonds and B-X coordination bonds reach proportions as shown in TABLE 2 by increasing the reaction temperature after the quantum dot solid was dispersed, this reaction temperature being 300 °C or below.

### Example 1-b

Example 1-b is carried out with reference to Example 1, and is different in making proportions of B-X covalent bonds and B-X coordination bonds reach proportions as shown in TABLE 2 by decreasing the reaction temperature after the quantum dot solid was dispersed, this reaction temperature being 30-100 °C and less than 100 °C.

### Example 1-c

Example 1-c is carried out with reference to Example 1, and is different in that type of the quantum dots is different, wherein specifically, the quantum dots are replaced by CdSe/ZnSe/ZnS quantum dots of a core-shell structure, and an amount thereof is unchanged.

### Example 1-d

Example 1-d is carried out with reference to Example 1, and is different in that type of the quantum dots is different, wherein specifically, the quantum dots are replaced by quaternary ZnCdSeS alloy quantum dots of a bare-core structure, and an amount thereof is unchanged.

### Example 1-e

Example 1-e is carried out with reference to Example 1, and is different in that types of boron-containing compounds are different, wherein the boron-containing compounds specifically are 10 g of boron tribromide and 2 g of 4-methylphenylboronic acid.

### Example 1-f

Example 1-f is carried out with reference to Example 1, and is different in that types of boron-containing compounds are different, wherein the boron-containing compounds specifically are 10 g of boron hydroxyl dibromide (which is prepared by adding 3 equivalents of boron tribromide slowly into 1 equivalent of water and partially hydrolyzing, and is formulated when using. Subsequent configuration is the same) and 2 g of 4-methylphenylboronic acid.

### Example 1-g

Example 1-g is carried out with reference to Example 1, and is different in that types of boron-containing compounds are different, wherein the boron-containing compounds specifically are 10 g of 3-carboxypropyl boronic acid and 2 g of 4-methylphenylboronic acid.

### Example 1-h

Example 1-h is carried out with reference to Example 1, and is different in that types of boron-containing compounds are different, wherein the boron-containing compounds specifically are 10 g of 4-bromobutyl boronic acid and 2 g of 4-methylphenylboronic acid.

### Example 1-i

Example 1-i is carried out with reference to Example 1, and is different in that types of boron-containing compounds are different, wherein the boron-containing compounds specifically are 10 g of phenylboronic acid monoethyl ester (obtained by controlled hydrolysis of phenylboronic acid diethyl ester, which is formulated when using. Subsequent configuration is the same) and 2 g of 4-methylphenylboronic acid.

### Example 1-j

Example 1-j is carried out with reference to Example 1, and is different in that types of boron-containing compounds are different, wherein the boron-containing compounds specifically are 10 g of diphenylboronic acid and 2 g of 4-methylphenylboronic acid.

### Example 1-k

Example 1-k is carried out with reference to Example 1, and is different in that types of boron-containing compounds are different, wherein the boron-containing compounds specifically are 10 g of 4-trifluoromethylphenylboronic acid and 2 g of 4-methylphenylboronic acid.

### Example 1-1

Example 1-1 is carried out with reference to Example 1, and is different in that types of boron-containing compounds are different, wherein the boron-containing compounds specifically are 10 g of 3-formylphenylboronic acid and 2 g of 4-methylphenylboronic acid.

### Example 1-m

Example 1-m is carried out with reference to Example 1, and is different in that types of boron-containing compounds are different, wherein the boron-containing compounds specifically are 10 g of 4-carboxyphenylboronic acid and 2 g of 4-methylphenylboronic acid.

### Comparative Example 1

Green CdSe/CdS/ZnS core-shell quantum dot octane dispersion liquid (Em=538 nm, Fwhm=23 nm). A mass fraction of quantum dots in the green quantum dot octane dispersion liquid was ≈17%.

### Comparative Example 2

Green CdSe/CdS/ZnS core-shell quantum dot dispersion liquid after treatment with organic thiol metal salt (Em=538 nm, Fwhm=23 nm). A mass ratio of the organic thiol metal salt to the green core-shell quantum dots was 0.6:1.

### Comparative Example 3

Green CdSe/CdS/ZnS core-shell quantum dot dispersion liquid after treatment with organic phosphonic metal salt (Em=538 nm, Fwhm=23 nm). A mass ratio of the organic phosphonic metal salt to the green core-shell quantum dots was 0.6:1.

### Comparative Example 4

Red CdSe/CdS/ZnS core-shell quantum dot octane dispersion liquid (Em=625 nm, Fwhm=23 nm). A mass fraction of quantum dots in the red quantum dot octane dispersion liquid was ≈17%.

### Comparative Example 5

Red CdSe/CdS/ZnS core-shell quantum dot octane dispersion liquid after treatment with organic thiol metal salt (Em=625 nm, Fwhm=23 nm); a mass ratio of the organic thiol metal salt to the red core-shell quantum dots was 0.6:1.

### Comparative Example 6

Red CdSe/CdS/ZnS core-shell quantum dot dispersion liquid after treatment with organic phosphonic metal salt (Em=625 nm, Fwhm=23 nm). A mass ratio of the organic phosphonic metal salt to the red core-shell quantum dots was 0.6:1.

### Comparative Example 9

Comparative Example 9 is carried out with reference to Example 1, and is different in that proportions of B-X covalent bonds and B-X coordination bonds are controlled to reach proportions as shown in TABLE 2, wherein regulation and control are required in order to satisfy this change of condition: input amounts of boron-containing compounds (dodecylboronic acid and 4-methylphenylboronic acid) are respectively reduced by 90%, and other conditions are unchanged.

### Comparative Example 10

Comparative Example 10 is carried out with reference to Example 1, and is different in that proportions of B-X covalent bonds and B-X coordination bonds are controlled to reach proportions as shown in TABLE 2, wherein regulation and control are required in order to satisfy this change of condition: an input amount of quantum dots is increased by 10 times, and other conditions are unchanged.

### Test Example 1

1. Corresponding quantum dot dispersion liquids (e.g., boron-containing quantum dot dispersion liquids or boron-free quantum dot dispersion liquids) obtained in the above examples and comparative examples were measured for contents of B element using ICP-OES (inductively coupled plasma optical emission spectrometer), and results are as shown in TABLE 1 and TABLE 2.

Moreover, proportions of the B-X covalent bonds and the B-X coordination bonds in corresponding quantum dot dispersion liquids of various examples were detected by a molecular absorption spectrum (nuclear magnetic resonance ¹¹B spectrum), and results are as shown in TABLE 1 and TABLE 2.

2. Corresponding quantum dot dispersion liquids obtained in the above examples and comparative examples were prepared into conventional quantum dot PS (polystyrene) optical sheets, which then were aged, and tracked for changes in PLQY (i.e., photoluminescence quantum yield) of the sheets.

In the above, a preparation method for the quantum dot PS optical sheet is as follows.

Certain masses of PS granular materials and aid (generally hindered phenol and hindered amine antioxidants, mainly for preventing oxidation and degradation in a melt extrusion process of PS and later severe use environment, herein obtained by compounding antioxidant 1010 and antioxidant 770 at a mass ratio of 2:1), and a corresponding quantum dot dispersion liquid were well mixed in a blender, where a mass ratio of the PS granular materials, the aid and the corresponding quantum dot dispersion liquid was 825:8.33:1. The above mixed granular materials were added into a miniature twin-screw extruder using a feeding funnel, melted, cut, well mixed, and then extruded into strips (an extrusion processing temperature was 260 °C), which were formed by a tableting machine into sheets sized 10 cm × 10 cm × 1 mm. In the above, a mass fraction of the quantum dot dispersion liquid was 0.12%, a mass fraction of the aid was 1%, and a mass fraction of PS was the balance.

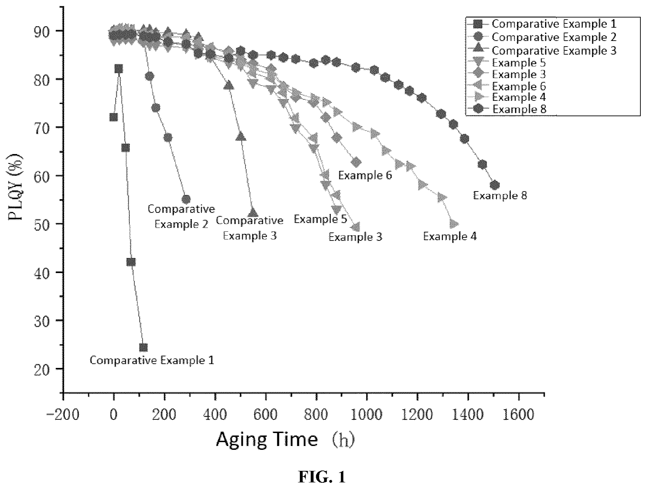

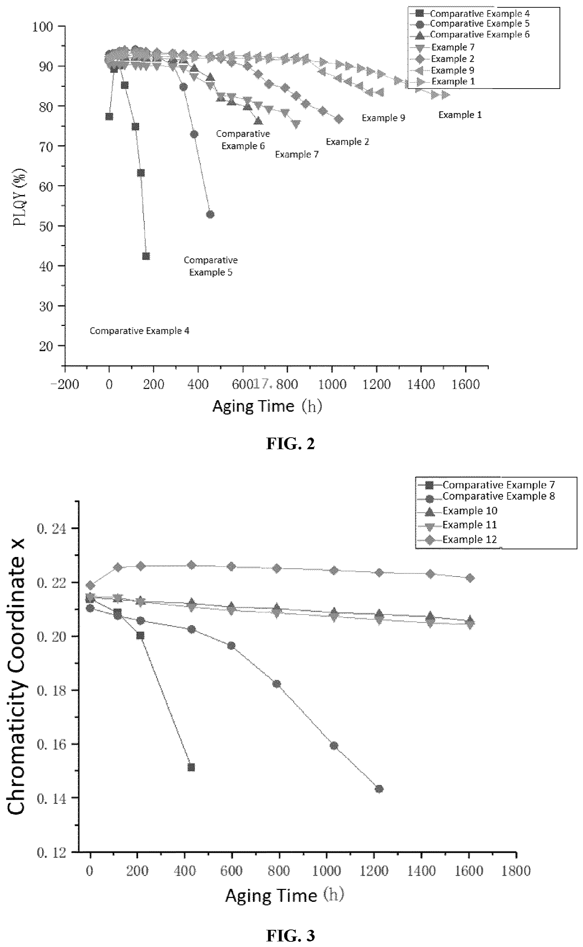

An aging test was performed on the above quantum dot PS optical sheets, where a testing condition was 85 °C, 90% RH, and 800 W/m² blue-light irradiance (a blue-light wavelength was 450 nm), under which condition, the quantum dot PS optical sheets with a thickness of 1 mm will warp, and need to be fixed at edges by fixing clips in an aging box. Testing time of an aging process generally had an interval of 24-72 h (specifically based on actual testing time), the quantum yield (PLQY) of the quantum dot PS optical sheets was measured using an integrating sphere, and results are as shown in TABLE 1, TABLE 2, FIG. 1, and FIG. 2. In TABLE 1 and TABLE 2, "/" indicates that the quantum yield is decreased too much (i.e., the yield of the green quantum dots is decreased by more than 20%, and the yield of the red quantum dots is decreased by more than 15%) and the test is stopped. In TABLE 1 and TABLE 2, "D" represents comparative example, and "S" represents example.

Moreover, density of black and yellow spots on plate surfaces was measured by a CCD appearance detector, wherein the "black and yellow spot" is defined as a local dark spot which has a diameter of greater than 0.1 mm and can be identified by the CCD appearance detector, and results are as shown in TABLE 1 and TABLE 2. The density of the black and yellow spots on the plate surfaces in subsequent tables is denoted by "β" (unit: spots/m²).

**TABLE 1 Test Results of Examples Corresponding to Green Quantum Dots**

| No. | Quantum Yield on Aging for Different time (%) | | | | | | | | β | B Content, ppm | Proportion of Covalent Bond | Proportion of coordination Bond |
|---|---|---|---|---|---|---|---|---|---|---|---|---|
| | 0 h | 117 h | 286 h | 550 h | 881 h | 1073 h | 1341 h | 1505 h | | | | |
| D1 | 72 | 24.4 | / | / | / | / | / | / | 3 | 0 | 0 | 0 |
| D2 | 92 | 88.7 | 55.1 | / | / | / | / | / | 1 | 0 | 0 | 0 |
| D3 | 90 | 90.1 | 89.2 | 52.1 | / | / | / | / | 26 | 0 | 0 | 0 |
| S5 | 88 | 87.7 | 86.6 | 79.3 | 53 | / | / | / | 2 | 3062 | 75.0% | 25.0% |
| S3 | 89 | 87.7 | 87.2 | 83.2 | 67.9 | / | / | / | 4 | 1913 | 61.4% | 38.6% |
| S6 | 90 | 89.7 | 88.6 | 81.3 | 56 | / | / | / | 3 | 2674 | 82.9% | 17.1% |
| S4 | 89 | 89.1 | 87 | 82.1 | 73.2 | 65.2 | 50 | / | 2 | 3152 | 91.4% | 8.6% |
| S8 | 89 | 88.9 | 87.2 | 85.0 | 83.5 | 80.3 | 70.6 | 58.1 | 7 | 3241 | 80.0% | 20.0% |

**TABLE 2 Test Results of Examples Corresponding to Red Quantum Dots**

| No. | Quantum Yield on Aging for Different time (%) | | | | | | | | β | B Content, ppm | Proportion of Covalent Bond | Proportion of coordination Bond |
|---|---|---|---|---|---|---|---|---|---|---|---|---|
| | 0 h | 165 h | 453 h | 669 h | 837 h | 103 0 h | 1217 h | 1505 h | | | | |
| D4 | 77.3 | 42.3 | / | / | / | / | / | / | 5 | 0 | 0 | 0 |
| D5 | 92.9 | 93.0 | 52.8 | / | / | / | / | / | 3 | 0 | 0 | 0 |
| D6 | 92.3 | 91.8 | 87.0 | 76.1 | / | / | / | / | 34 | 0 | 0 | 0 |
| S7 | 90.5 | 90.0 | 85.2 | 80.3 | 75.6 | / | / | / | 2 | 7532 | 55% | 45% |
| S2 | 91.4 | 93.6 | 92.2 | 87.9 | 82.5 | 76.7 | / | / | 3 | 6990 | 82.9% | 17.1% |
| S9 | 92.3 | 92.9 | 92.4 | 92.3 | 92.2 | 86.9 | 83.4 | / | 5 | 2558 | 80% | 20% |
| S1 | 91.7 | 92.3 | 91.8 | 91.7 | 91.6 | 90.4 | 87.9 | 82.8 | 1 | 2838 | 75% | 25% |
| D9 | 91.6 | 81.5 | 74.2 | / | / | / | / | / | 5 | 298 | 99.95% | 0.05% |
| D10 | 94.6 | 82.8 | 70.4 | / | / | / | / | / | 12 | 1604 | 99.95% | 0.05% |
| S1-a | 90.9 | 91.1 | 90.5 | 89.8 | 89.4 | 84.7 | 83.2 | / | 6 | 2838 | 83.3% | 16.7% |
| S1-b | 95.2 | 94.8 | 93.9 | 90.3 | 85.2 | 78.9 | / | / | 9 | 2838 | 66.7% | 33.3% |
| S1-c | 92.7 | 93.0 | 91.3 | 91.0 | 91.7 | 89.4 | 88.9 | 83.2 | 4 | 2838 | 75% | 25% |
| S1-d | 92.8 | 91.7 | 92.0 | 91.1 | 90.6 | 88.0 | 84.1 | 79.3 | 3 | 2838 | 75% | 25% |
| S1-e | 91.1 | 90.9 | 86.7 | 78.3 | 66.5 | / | / | / | 57 | 2521 | 75% | 25% |
| S1-f | 91.8 | 92.1 | 92.0 | 91.6 | 84.2 | 73.4 | / | / | 38 | 3139 | 80% | 20% |
| S1-g | 93.3 | 93.1 | 92.7 | 91.9 | 88.0 | 86.2 | 81.1 | / | 5 | 4178 | 75% | 25% |
| S1-h | 90.3 | 91.3 | 90.9 | 90.7 | 89.8 | 87.3 | 78.2 | / | 10 | 3231 | 75% | 25% |
| S1-i | 89.9 | 88.9 | 88.6 | 87.5 | 86.2 | 85.5 | 83.9 | / | 2 | 3758 | 75% | 25% |
| S1-j | 93.0 | 92.6 | 89.4 | 82.7 | 72.7 | / | / | / | 0 | 3215 | 55% | 45% |
| S1-k | 91.5 | 91.6 | 91.2 | 90.8 | 90.1 | 89.4 | 82.8 | / | 2 | 3109 | 75% | 25% |
| S1-l | 92.3 | 92.1 | 91.5 | 91.4 | 90.9 | 90.2 | 83.3 | / | 8 | 3758 | 75% | 25% |
| S1-m | 92.8 | 93.0 | 92.5 | 90.5 | 88.8 | 86.4 | 76.2 | / | 9 | 3461 | 75% | 25% |

Stability data in TABLE 1, TABLE 2, FIG. 1, and FIG. 2 show that by preparing the boron-containing quantum dot composite aggregate by treating and coating the surfaces of the quantum dots with suitable amounts of boron-containing compounds, the examples of the present invention achieve the protection for the anions on the surfaces of the quantum dots, and render good heat resistance. This quantum dot material is used to prepare the quantum dot PS sheets, and without a water oxygen barrier film, the quantum dots is significantly improved in the stability compared with the prior art, can withstand high-temperature, high-humidity blue light aging (85 °C, 90% RH, 800 W/m²) for a period of 1500 h or more, and meanwhile effectively avoid the appearance of black and yellow spots.

Further, by using the examples of the present invention in which R₈, R₉, R₁₀, and R₁₁ do not simultaneously contain a phenyl group; and/or R₈ and R₉ are not simultaneously halogen, and R₁₀ and R₁₁ are not simultaneously halogen, it is more conducive to improving the stability of the quantum dots, meanwhile ensuring excellent optical performance, and further effectively avoiding the appearance of the black and yellow spots.

### 2. Preparation of a boron-containing quantum dot optical diffuser plate:

### Example 10

In step (1), 200 kg of PS granular materials, 500 g of a green quantum dot concentrate (a mass fraction was ≈17%, and a solvent was n-octane), and 100 g of a red quantum dot concentrate (a mass fraction was ≈17%, and a solvent was n-octane) were stirred in a high-speed stirrer (a stirring speed was 500 rpm) for 3 min, and well mixed to render a quantum dot polymer mixture for later use.

In step (2), 0.5 kg of boric acid, 0.5 kg of dodecylboronic acid, 1 kg of antioxidant 1076, 0.5 kg of photostabilizer 123, and 47.5 kg of PS granular materials were well mixed and stirred, and then extruded and granulated to render aid granular materials which were homogenized for later use, wherein an extrusion temperature was 200 °C.

In step (3), using a loss-in-weight feeder, the well-mixed quantum dot polymer mixture and the aid granular materials were fed into a layer B extruder, 25 kg of PS diffusion master batches were fed into a layer A extruder, 25 kg of PS toughening master batches were fed into a layer C extruder, and co-extrusion was performed to form a three-layer structure plate material with A and C sandwiching B, and then in the ABC three-layer structure plate material, a proportion of the quantum dot concentrate was 0.1%, and a mass proportion of the quantum dots was 0.017%. The above materials were subjected to high-temperature melt extrusion and calendaring to render a quantum dot diffuser plate with a thickness of 1.5 mm. A processing temperature of the melt extrusion was 260 °C and a reaction time was 1.5 min.

### Example 11

Example 11 is carried out with reference to Example 10, and is different in that step (2) is different. Step (2) is: 1 kg of boric acid, 0.7 kg of hydroxymethylphenylboronic acid, 1 kg of antioxidant 1010, 0.5 kg of photostabilizer 770, and 46.8 kg of PS granular materials were well mixed and stirred, and then extruded and granulated to render aid granular materials, which were homogenized for later use.

### Example 12

Example 12 is carried out with reference to Example 10, and is different in that step (2) is different. Step (2) is: 1.2 kg of triethyl borate, 1.2 kg of cyclopropyl boronic acid, 1.2 kg of antioxidant MD-1024, 0.5 kg of photostabilizer 944, and 45.9 kg of PS granular materials were well mixed and stirred, and then extruded and granulated to render aid granular materials, which were homogenized for later use.

### Example 13

Example 13 is carried out with reference to Example 10, and is different in that step (2) is different. Step (2) is: 0.3 kg of boric acid, 0.3 kg of dodecylboronic acid, 1 kg of antioxidant 1076, 0.5 kg of photostabilizer 123, and 47.9 kg of PS granular materials were well mixed and stirred, and then extruded and granulated to render aid granular materials, which were homogenized for later use.

### Example 14

Example 14 is carried out with reference to Example 10, and is different in that step (2) is different. Step (2) is: 0.6 kg of boric acid, 0.6 kg of dodecylboronic acid, 1 kg of antioxidant 1076, 0.5 kg of photostabilizer 123, and 47.3 kg of PS granular materials were well mixed and stirred, and then extruded and granulated to render aid granular materials, which were homogenized for later use.

### Example 15

Example 15 is carried out with reference to Example 10, and is different in that step (2) is different. Step (2) is: 1.2 kg of boric acid, 1.2 kg of dodecylboronic acid, 1 kg of antioxidant 1076, 0.5 kg of photostabilizer 123, and 46.1 kg of PS granular materials were well mixed and stirred, and then extruded and granulated to render aid granular materials, which were homogenized for later use.

### Example 16

Example 16 is carried out with reference to Example 10, and is different in that step (2) is different. Step (2) is: 2 kg of boric acid, 2 kg of dodecylboronic acid, 1 kg of antioxidant 1076, 0.5 kg of photostabilizer 123, and 44.5 kg of PS granular materials were well mixed and stirred, and then extruded and granulated to render aid granular materials, which were homogenized for later use.

### Example 10-a

Example 10-a is carried out with reference to Example 10, and is different in making proportions of B-X covalent bonds and B-X coordination bonds reach proportions as shown in TABLE 5 by increasing a processing temperature of the melt extrusion in step (3). Chemical structures of the tricoordinate boron-containing quantum dot composite and the tetracoordinate boron-containing quantum dot composite contained in products are unchanged.

### Example 10-b

Example 10-b is carried out with reference to Example 10, and is different in making proportions of B-X covalent bonds and B-X coordination bonds reach proportions as shown in TABLE 5 by decreasing a processing temperature of the melt extrusion in step (3). Chemical structures of the tricoordinate boron-containing quantum dot composite and the tetracoordinate boron-containing quantum dot composite contained in products are unchanged.

### Example 10-c

Example 10-c is carried out with reference to Example 10, and is different in that type of the quantum dots is different, wherein specifically, the quantum dots are replaced by CdZnSe/ZnSe/ZnS quantum dots of a core-shell structure, and an amount thereof is unchanged. Chemical structures of the tricoordinate boron-containing quantum dot composite and the tetracoordinate boron-containing quantum dot composite contained in products are unchanged.

### Example 10-d

Example 10-d is carried out with reference to Example 10, and is different in that type of the quantum dots is different, wherein specifically, the quantum dots are replaced by quaternary ZnCdSeS alloy quantum dots of a bare-core structure, and an amount thereof is unchanged. Chemical structures of the tricoordinate boron-containing quantum dot composite and the tetracoordinate boron-containing quantum dot composite contained in products are unchanged.

### Example 10-e

Example 10-e is carried out with reference to Example 10, and is different in that in step (2) an amount of boric acid is adjusted to 0 kg, and an amount of dodecylboronic acid is adjusted to 1 kg. A mass of the boron-containing compound used for coordination binding to other lone pair electrons or conjugated electron donors except the quantum dots in raw materials is 900% of a mass of the quantum dots in this example.

### Example 17

Example 17 is carried out with reference to Example 10, and is different in that boron tribromide is used to replace boric acid in step (2), and an amount thereof is unchanged.

### Example 18

Example 18 is carried out with reference to Example 10, and is different in that 4-methylphenylboronic acid is used to replace boric acid in step (2), and an amount is unchanged.

### Example 19

Example 19 is carried out with reference to Example 10, and is different in that 3-carboxypropyl boronic acid is used to replace boric acid in step (2), and an amount is unchanged.

### Example 20

Example 20 is carried out with reference to Example 10, and is different in that 4-bromobutyl boronic acid is used to replace boric acid in step (2), and an amount is unchanged.

### Example 21

Example 21 is carried out with reference to Example 10, and is different in that hydroxypropyl boronic acid is used to replace boric acid in step (2), and an amount is unchanged.

### Example 22

Example 22 is carried out with reference to Example 10, and is different in that boronic acid diethyl ester is used to replace boric acid in step (2), and an amount is unchanged.

### Example 23

Example 23 is carried out with reference to Example 10, and is different in that phenylboronic acid monoethyl ester is used to replace boric acid in step (2), and an amount is unchanged.

### Example 24

Example 24 is carried out with reference to Example 10, and is different in that 4-trifluoromethylphenylboronic acid is used to replace boric acid in step (2), and an amount is unchanged.

### Example 25

Example 25 is carried out with reference to Example 10, and is different in that B,B-bis(4-fluorophenyl)boronic acid is used to replace boric acid in step (2), and an amount is unchanged.

### Example 26

Example 26 is carried out with reference to Example 10, and is different in that 3-formylphenylboronic acid is used to replace boric acid in step (2), and an amount is unchanged.

### Example 27

Example 27 is carried out with reference to Example 10, and is different in that 4-carboxyphenylboronic acid is used to replace boric acid in step (2), and an amount is unchanged.

### Comparative Example 7

Comparative Example 7 is carried out with reference to Example 10, and is different in that types of the quantum dots are the same, a total amount is unchanged, but no boron-containing compound is added. Specifically, in step (2), only 1 kg of antioxidant 1076, 0.5 kg of photostabilizer 123, and 48.5 kg of PS granular materials were well mixed and stirred, and then extruded and granulated to render aid granular materials which were homogenized for later use.

### Comparative Example 8

Comparative Example 8 is carried out with reference to Example 10, and is different in that types of the quantum dots are the same, a total amount is unchanged, but a thiolate and a phosphate are added instead of the boron-containing compounds. Specifically, in step (2), 0.5 kg of zinc octanethiol, 0.5 kg of dodecyl zinc phosphonate, 1 kg of antioxidant 1076, 0.5 kg of photostabilizer 123, and 47.5 kg of PS granular materials were well mixed and stirred, and then extruded and granulated to render aid granular materials which were homogenized for later use.

### Comparative Example 11

Comparative Example 11 is carried out with reference to Example 10, and is different in that proportions of B-X covalent bonds and B-X coordination bonds are controlled to reach proportions as shown in TABLE 5, and regulation and control are required in order to satisfy this change of condition: decreasing an amount of boron compounds used in step (2). Step (2) is: 0.03 kg of boric acid, 0.03 kg of dodecylboronic acid, 1 kg of antioxidant 1076, 0.5 kg of photostabilizer 123, and 48.44 kg of PS granular materials were well mixed and stirred, and then extruded and granulated to render aid granular materials which were homogenized for later use.

In the above, corresponding absorption spectrum (nuclear magnetic resonance ¹¹B spectrum) test was conducted on products of various above examples and comparative examples. Test results show that groups in Formula I corresponding to the tricoordinate boron-containing quantum dot composites and Formula II corresponding to the tetracoordinate boron-containing quantum dot composites contained in the products are respectively as shown in TABLE 3-1 and TABLE 3-2. Only the most foundational structures in corresponding general formulas are written herein, and derivative forms are excluded. In the above, the products are chain-like, n₁ and n₂ are natural numbers, and n₁ and n₂ are calculated on the basis of theoretical values of feeding.

**TABLE 3-1 Chemical Structures of Tricoordinate Boron-containing Quantum Dot Composites**

| Group Corresponding to Formula I | R₈ | R₉ | Theoretical Value n₁ of Feeding | X₁ | X₂ | X₃ |
|---|---|---|---|---|---|---|
| Example 1 | Dodecyl | 4-methylphenyl | 1 | O | S | S |
| Example 2 | Hydroxyl | Hydroxyl | 2 | O | S | S |
| Example 3 | Octyloxy | Hydroxyl | 2 | O | S | S |
| Example 4 | Difluorophenyl | Octyloxy | 2 | O | S | S |
| Example 5 | Hydroxymethyl phenyl | Hydroxymethyl phenyl | 1 | O | S | S |
| Example 6 | Octyloxy | Hydroxyl | 2 | O | S | S |
| Example 7 | Hydroxyl | Hydroxyl | 9 | O | S | S |
| Example 8 | Butyl | 4-methylphenyl | 1 | O | S | S |
| Example 9 | Dimethoxyphenyl | Dimethoxyphenyl | 1 | O | S | S |
| Example 1-e | Bromo | 4-methylphenyl | 1 | O | S | S |
| Example 1-f | Bromo | 4-methylphenyl | 3 | O | S | S |
| Example 1-g | 3-carboxypropyl | 4-methylphenyl | 1 | O | S | S |
| Example 1-h | 4-bromobutyl | 4-methylphenyl | 1 | O | S | S |
| Example 1-i | Phenyl | 4-methylphenyl | 1 | O | S | S |
| Example 1-j | 4-methylphenyl | 4-methylphenyl | 1 | O | S | S |
| Example 1-k | 4-trifluoromethylphenyl | 4-methylphenyl | 1 | O | S | S |
| Example 1-l | 3-formylphenyl | 4-methylphenyl | 1 | O | S | S |
| Example 1-m | 4-carboxyphenyl | 4-methylphenyl | 1 | O | S | S |
| Comparative Example 9 | Dodecyl | 4-methylphenyl | 1 | O | S | S |
| Comparative Example 10 | Dodecyl | 4-methylphenyl | 1 | O | S | S |
| Example 10 | Hydroxyl | Dodecyl | 4 | O | S | S |
| Example 10-e | Dodecyl | Dodecyl | 1 | O | S | S |
| Example 11 | Hydroxyl | Hydroxymethyl phenyl | 6 | O | S | S |
| Example 12 | Ethoxyl | Cyclopropyl | 1 | O | S | S |
| Example 13 | Hydroxyl | Dodecyl | 4 | O | S | S |
| Example 14 | Hydroxyl | Dodecyl | 4 | O | S | S |
| Example 15 | Hydroxyl | Dodecyl | 4 | O | S | S |
| Example 16 | Hydroxyl | Dodecyl | 4 | O | S | S |
| Example 17 | Bromo | Dodecyl | 4 | O | S | S |
| Example 18 | 4-methylphenyl | Dodecyl | 1 | O | S | S |
| Example 19 | 3-carboxypropyl | Dodecyl | 1 | O | S | S |
| Example 20 | 4-bromobutyl | Dodecyl | 1 | O | S | S |
| Example 21 | Hydroxypropyl | Dodecyl | 1 | O | S | S |
| Example 22 | Ethoxyl | Dodecyl | 4 | O | S | S |
| Example 23 | Phenyl | Dodecyl | 1 | O | S | S |
| Example 24 | 4-trifluoromethylphenyl | Dodecyl | 1 | O | S | S |
| Example 25 | 4-fluorophenyl | Dodecyl | 1 | O | S | S |
| Example 26 | 3-formylphenyl | Dodecyl | 1 | O | S | S |
| Example 27 | 4-carboxyphenyl | Dodecyl | 1 | O | S | S |
| Comparative Example 11 | Hydroxyl | Dodecyl | 4 | O | S | S |

**TABLE 3-2 Chemical Structures of Tetracoordinate Boron-containing Quantum Dot Composites**

| Group Corresponding to Formula II | R₁₀ | R₁₁ | R₁₂ | R₁₃ | Theoretical Value n₂ of Feeding | X₄ |
|---|---|---|---|---|---|---|
| Example 1 | Dodecyl | Hydroxyl | 4-methylphenyl | Hydroxyl | 1 | O |
| Example 2 | Hydroxyl | Hydroxyl | Hydroxyl | Hydroxyl | 2 | O |
| Example 3 | Octyloxy | Octyloxy | Octyloxy | Octyloxy | 2 | O |
| Example 4 | Difluorophenyl | Hydroxyl | Octyloxy | Octyloxy | 2 | O |
| Example 5 | Hydroxymethyl phenyl | Hydroxyl | Hydroxymethyl phenyl | Hydroxyl | 1 | O |
| Example 6 | Octyloxy | Octyloxy | Octyloxy | Octyloxy | 2 | O |
| Example 7 | Hydroxyl | Hydroxyl | Hydroxyl | Hydroxyl | 9 | O |
| Example 8 | Butyl | Butyl | 4-methylphenyl | Hydroxyl | 1 | O |
| Example 9 | Dimethoxyphenyl | Hydroxyl | Dimethoxyphenyl | Hydroxyl | 1 | O |
| Example 1-e | Bromo | Bromo | 4-methylphenyl | Hydroxyl | 1 | O |
| Example 1-f | Bromo | Bromo | 4-methylphenyl | Hydroxyl | 3 | O |
| Example 1-g | 3-carboxypropyl | Hydroxyl | 4-methylphenyl | Hydroxyl | 1 | O |
| Example 1-h | 4-bromobutyl | Hydroxyl | 4-methylphenyl | Hydroxyl | 1 | O |
| Example 1-i | Phenyl | Ethoxyl | 4-methylphenyl | Hydroxyl | 1 | O |
| Example 1-i | Phenyl | Phenyl | 4-methylphenyl | Hydroxyl | 1 | O |
| Example 1-k | 4-trifluoromethylphenyl | Hydroxyl | 4-methylphenyl | Hydroxyl | 1 | O |
| Example 1-l | 3-formylphenyl | Hydroxyl | 4-methylphenyl | Hydroxyl | 1 | O |
| Example 1-m | 4-carboxyphenyl | Hydroxyl | 4-methylphenyl | Hydroxyl | 1 | O |
| Comparative Example 9 | Dodecyl | Hydroxyl | 4-methylphenyl | Hydroxyl | 1 | O |
| Comparative Example 10 | Dodecyl | Hydroxyl | 4-methylphenyl | Hydroxyl | 1 | O |
| Example 10 | Dodecyl | Hydroxyl | Dodecyl | Hydroxyl | 4 | O |
| Example 10-e | Dodecyl | Hydroxyl | Dodecyl | Hydroxyl | 1 | O |
| Example 11 | Hydroxymethyl phenyl | Hydroxyl | Hydroxymethyl phenyl | Hydroxyl | 6 | O |
| Example 12 | Cyclopropyl | Hydroxyl | Ethoxyl | Ethoxyl | 1 | O |
| Example 13 | Dodecyl | Hydroxyl | Dodecyl | Hydroxyl | 4 | O |
| Example 14 | Dodecyl | Hydroxyl | Dodecyl | Hydroxyl | 4 | O |
| Example 15 | Dodecyl | Hydroxyl | Dodecyl | Hydroxyl | 4 | O |
| Example 16 | Dodecyl | Hydroxyl | Dodecyl | Hydroxyl | 4 | O |
| Example 17 | Bromo | Bromo | Dodecyl | Hydroxyl | 4 | O |
| Example 18 | 4-methylphenyl | Hydroxyl | Dodecyl | Hydroxyl | 1 | O |
| Example 19 | 3-carboxypropyl | Hydroxyl | Dodecyl | Hydroxyl | 1 | O |
| Example 20 | 4-bromobutyl | Hydroxyl | Dodecyl | Hydroxyl | 1 | O |
| Example 21 | Hydroxypropyl | Hydroxyl | Dodecyl | Hydroxyl | 1 | O |
| Example 22 | Ethoxyl | Ethoxyl | Dodecyl | Hydroxyl | 4 | O |
| Example 23 | Phenyl | Ethoxyl | Dodecyl | Hydroxyl | 1 | O |
| Example 24 | 4-trifluoromethylphenyl | Hydroxyl | Dodecyl | Hydroxyl | 1 | O |
| Example 25 | 4-fluorophenyl | Hydroxyl | Dodecyl | Hydroxyl | 1 | O |
| Example 26 | 3-formylphenyl | Hydroxyl | Dodecyl | Hydroxyl | 1 | O |
| Example 27 | 4-carboxyphenyl | Hydroxyl | Dodecyl | Hydroxyl | 1 | O |
| Comparative Example 11 | Dodecyl | Hydroxyl | Dodecyl | Hydroxyl | 4 | O |

### Test Example 2

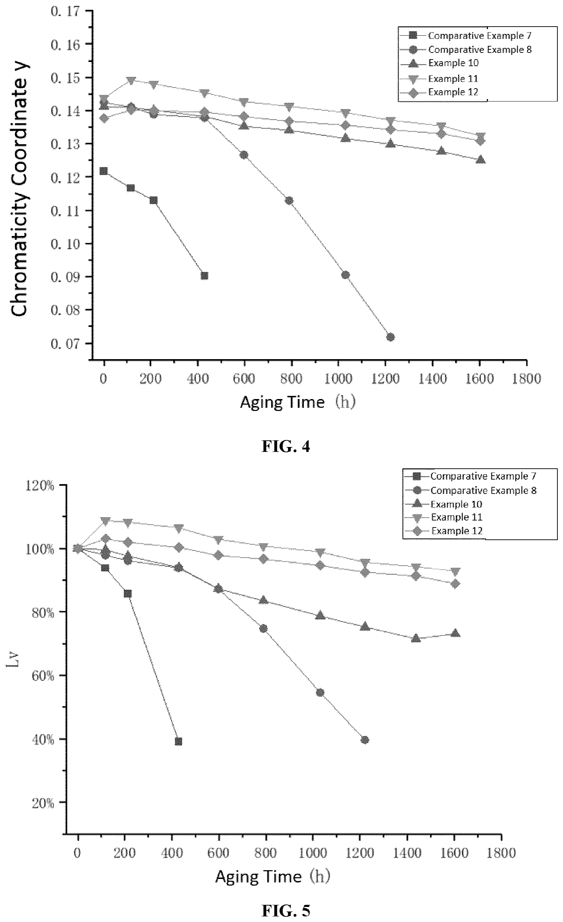

Taking Comparative Examples 7 and 8 and Examples 10-12 as examples, the aging test was carried out on the quantum dot PS optical diffuser plates manufactured by production lines corresponding to the instances, under a test condition of 85 °C, 90% RH, and 800 W/m² blue-light irradiance (blue-light wavelength was 450 nm). Testing time of an aging process generally had an interval of 100-200 h. Chromaticity coordinates x and y and luminance Lv value of the quantum dot PS optical diffuser plates were measured using a color analyzer, and results are as shown in FIG. 3 (change in chromaticity coordinate x), FIG. 4 (change in chromaticity coordinate y), and FIG. 5 (change in luminance Lv value).

Moreover, the same aging test was carried out on Examples 13-16. See TABLE 4 for initial values before the aging and test results after the last aging in Examples 13-16 and Comparative Example 8. In the above, Δx and Δy are respectively a difference value of a value of chromaticity coordinate X after aging minus a value of chromaticity coordinate X before aging, and a difference value of a value of chromaticity coordinate Y after aging minus a value of chromaticity coordinate Y before aging, and if there is decrease, Δx and Δy are negative values; a calculation method of ΔLv% is (luminance Lv value after aging - luminance Lv value before aging) / luminance Lv value before aging.

**TABLE 4**

| No. | Chromaticity Coordinate, Luminance (before aging) | Chromaticity Coordinate, Luminance (after last aging Th) | Chromaticity Coordinate, Luminance Change |
|---|---|---|---|
| Comparative Example 8 | x=0.2103 | T= 1221 | Δx=-0.0670 |
| | y=0.1424 | x=0.1433 | Δy=-0.0706 |
| | Lv=412.3 | y=0.0718 | ΔLv%=-60.3% |
| | | Lv=163.5 | |
| Example 13 | x=0.2143 | T=1605 | Δx=-0.0316 |
| | y=0.1426 | x=0.1827 | Δy=-0.0324 |
| | Lv=476 | y=0.1102 | ΔLv%=-35.5% |
| | | Lv=307 | |
| Example 14 | x=0.2108 | T=1605 | Δx=-0.0062 |
| | y=0.1421 | x=0.2046 | Δy=-0.0125 |
| | Lv=400.5 | y=0.1296 | ΔLv%=-21.5% |
| | | Lv=314.2 | |
| Example 15 | x=0.2147 | T=1605 | Δx=-0.0008 |
| | y=0.1438 | x=0.2139 | Δy=-0.0123 |
| | Lv=472.1 | y=0.1315 | ΔLv%=-14.6% |
| | | Lv=403.2 | |
| Example 16 | x=0.1999 | T=1605 | Δx=0.0025 |
| | y=0.091 | x=0.2024 | Δy=-0.0045 |
| | Lv=354.3 | y=0.0865 | ΔLv%=-11.1% |
| | | Lv=314.9 | |

The above data in FIGS. 3-5 and TABLE 4 indicate that: in the examples of the present invention, the quantum dot optical diffuser plates prepared with the boron-containing compounds of suitable amounts have good heat resistance, and it is realized the boron-containing compounds coating the quantum dots in the extrusion process. Compared with the prior art (free of boron-containing compounds), the present invention significantly improves the stability of the quantum dot optical diffuser plates, and ensures excellent optical performance. In the above, the optical performance and stability of Examples 13/14/15/16 are substantially comparable with those of Example 10, and Example 13 is slightly inferior to Example 10, and the optical performance and stability of Examples 14/15/16 gradually become better.

### Test Example 3

For the quantum dot PS optical diffuser plates prepared by production lines corresponding to the above comparative examples and examples, B element of different quantum dot diffuser plates was measured using ICP-OES, and results are as shown in TABLE 5.

Moreover, density of the black and yellow spots of on plate surfaces was measured by the same method as in Test Example 1, and results are as shown in TABLE 5. The density of the black and yellow spots on the plate surfaces in subsequent table is denoted by "β".

Moreover, proportions of the B-X covalent bonds and the B-X coordination bonds in the quantum dot PS optical diffuser plates of various examples were detected by a molecular absorption spectrum (nuclear magnetic resonance ¹¹B spectrum), and results are as shown in TABLE 5.

**TABLE 5**

| No. | Boron Element Content (ppm) | β | Covalent Bond Proportion | Coordination Bond Proportion |
|---|---|---|---|---|
| Comparative Example 7 | 0 | 14 | 100% | 0% |
| Comparative Example 8 | 0 | 43 | 100% | 0% |
| Comparative Example 11 | 22.4 | 13 | 99.91% | 0.09% |
| Example 10 | 375 | 2 | 80.8% | 19.2% |
| Example 10-a | 375 | 6 | 96.2% | 3.8% |
| Example 10-b | 375 | 0 | 96.2% | 3.8% |
| Example 10-c | 375 | 1 | 80.8% | 19.2% |
| Example 10-d | 375 | 2 | 80.8% | 19.2% |
| Example 10-e | 168 | 3 | 80.8% | 19.2% |
| Example 11 | 747 | 6 | 77.9% | 22.1% |
| Example 12 | 797 | 5 | 80% | 20% |
| Example 13 | 225 | 8 | 90.4% | 9.6% |
| Example 14 | 449 | 1 | 77.6% | 22.4% |
| Example 15 | 899 | 3 | 69.6% | 30.4% |
| Example 16 | 1498 | 11 | 663% | 33.7% |
| Example 17 | 156 | 8 | 88.5% | 11.5% |
| Example 18 | 216 | 1 | 70% | 30% |
| Example 19 | 220 | 7 | 70% | 30% |
| Example 20 | 183 | 6 | 70% | 30% |
| Example 21 | 257 | 5 | 70% | 30% |
| Example 22 | 260 | 4 | 76.9% | 23.1% |
| Example 23 | 204 | 1 | 70% | 30% |
| Example 24 | 179 | 0 | 70% | 30% |
| Example 25 | 166 | 1 | 55% | 45% |
| Example 26 | 204 | 6 | 70% | 30% |
| Example 27 | 192 | 5 | 70% | 30% |

The above data in FIGS. 3-5, TABLE 4 and TABLE 5 indicate that: in the examples of the present invention, the quantum dot optical diffuser plates prepared with the boron-containing compounds of suitable amounts have good heat resistance, the stability of the quantum dot optical diffuser plates is significantly improved, excellent optical performance is ensured, and appearance of black and yellow spots is effectively avoided.

Further, it can be seen from the data in Example 10, Examples 13-16, TABLE 4 and TABLE 5 that, in the examples of the present invention, the stability of the quantum dot optical diffuser plates is positively correlated with the amount of the boron-containing compounds (the mass content of the boron element). When the content of the boron element is in a suitable range, the stability is gradually enhanced, which sufficiently indicates that the boron-containing compounds protect the optical property of the quantum dots.

The preferred embodiments of the present invention are described in detail in the above, but the present invention is not limited thereto. Within the scope of the technical idea of the present invention, many simple modifications can be made to the technical solutions of the present invention, including combining various technical features in any other suitable way, and these simple modifications and combinations should likewise be regarded as contents disclosed in the present invention, and all fall within the scope of protection of the present invention.

### INDUSTRIAL APPLICABILITY

Through the quantum dots stabilized by the boron-containing compounds, the present invention forms the tricoordinate boron-containing quantum dot composite and the tetracoordinate boron-containing quantum dot composite with suitable boron contents. As the number of valence orbits (4) of boron is more than the number of valence bond electrons (3), boron forms a planar triangular tricoordinate boron-containing quantum dot composite mainly by sp² hybridization and retains an empty p orbit when forming a neutral compound with the quantum dots, consequently, the tricoordinate boron compound is obviously electron-deficient and is easily attacked by an electron-rich group to form the tetracoordinate boron-containing quantum dot composite. Hence, the boron-containing compounds can bind to anions on surfaces of the quantum dots as Z-type ligands to form more stable protection therefor. The boron compounds have good heat resistance, meanwhile ensure the excellent optical performance, and effectively avoid appearance of the black and yellow spots. Moreover, the proportion of the X-B coordination bonds to the sum of the number of the X-B covalent bonds and the number of the X-B coordination bonds in the boron-containing quantum dot composite aggregate is controlled within a suitable range, thus the strong binding capacity of the tricoordinate boron-containing quantum dot composite and the strong oxidation resistance of the tetracoordinate boron-containing quantum dot composite can be fully utilized, which is more conducive to rendering strong binding capacity and oxidation resistance, better heat resistance and stability, and a longer service life, and further effectively avoids the appearance of black and yellow spots. Compared with the quantum dot composites in the prior art, the present invention significantly improves the stability of the quantum dots. The essential principle is that the boron-containing compounds (particularly the electron-deficient tricoordinate boron-containing compound) can protect the quantum dot anions as ligands, and can form the tricoordinate boron-containing quantum dot composite and the tetracoordinate boron-containing quantum dot composite with suitable boron contents, so as to achieve the effect of improving the stability of the quantum dots. The present invention is applicable to quite broad scenarios, and has a good application prospect in electroluminescence application.

## Claims

1. A boron-containing quantum dot composite aggregate, **characterized by** comprising a tricoordinate boron-containing quantum dot composite and a tetracoordinate boron-containing quantum dot composite formed by chemically bonding a boron-containing compound and quantum dots, wherein the boron-containing compound in the tricoordinate boron-containing quantum dot composite is linked to the quantum dots by covalent bonds, the boron-containing compound in the tetracoordinate boron-containing quantum dot composite is linked to the quantum dots by coordination bonds, and a proportion of the number of X-B coordination bonds in the boron-containing quantum dot composite aggregate is 0.10%-50% of a sum of the number of X-B covalent bonds and the number of X-B coordination bonds, where X is selected from X₁, X₂, X₃, X₄, X₅, and X₆, a chemical general formula of the tricoordinate boron-containing quantum dot composite is Formula I as follows, and a chemical general formula of the tetracoordinate boron-containing quantum dot composite is Formula II as follows: 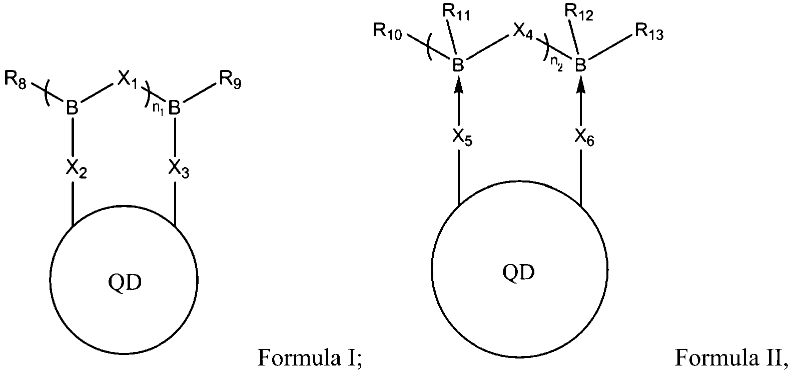 wherein QD is a quantum dot; R₈, R₉, R₁₀, R₁₁, R₁₂, and R₁₃ are each independently selected from the group consisting of an alkoxy group, a hydrocarbyl group, a substituted hydrocarbyl group, a halogen, a carboxyl group, a hydroxyl group, an aldehyde group, an ester group, and an amide group, a substituent group in the substituted hydrocarbyl group is at least one selected from the group consisting of a halogen, a hydroxyalkyl group, an alkyl group, a hydroxyl group, an alkoxy group, a carboxyl group, an aldehyde group, an ester group, and an amide group; n₁=natural number, n₂=natural number; and X₁, X₂, X₃, X₄, X₅, and X₆ are each independently selected from the group consisting of a group VIA element, a group VA element, and a group IVA element.

2. The boron-containing quantum dot composite aggregate according to claim 1, wherein the boron-containing quantum dot composite aggregate is a boron-containing quantum dot dispersion liquid, and a content of a boron element in the boron-containing quantum dot dispersion liquid is 1000 ppm-9000 ppm.

3. The boron-containing quantum dot composite aggregate according to claim 1 or 2, wherein the boron-containing quantum dot composite aggregate is a boron-containing quantum dot composite plate, and a content of a boron element in the boron-containing quantum dot composite plate is 13 ppm-1750 ppm.

4. The boron-containing quantum dot composite aggregate according to any one of claims 1-3, wherein X₁, X₂, X₃, X₄, X₅, and X₆ are each independently selected from the group consisting of O, S, Se, Te, N, P, As, C, Si, and Ge;
and/or R₈, R₉, R₁₀, R₁₁, R₁₂, and R₁₃ are each independently selected from the group consisting of an alkoxy group having 1-18 carbon atoms, a hydrocarbyl group having 1-18 carbon atoms, a substituted hydrocarbyl group having 1-18 carbon atoms, a halogen, a carboxyl group, a hydroxyl group, an aldehyde group, an ester group, and an amide group; and the hydrocarbyl group having 1-18 carbon atoms is selected from the group consisting of an alkyl group having 1-18 carbon atoms, an aryl group having 6-18 carbon atoms, an alkenyl group having 2-18 carbon atoms, and an alkynyl group having 2-18 carbon atoms.

5. The boron-containing quantum dot composite aggregate according to any one of claims 1-4, wherein X₁, X₂, X₃, X₄, X₅, and X₆ are each any one independently selected from O and S;
and/or R₈, R₉, R₁₀, R₁₁, R₁₂, and R₁₃ are each independently selected from the group consisting of an alkoxy group having 1-18 carbon atoms, an alkyl group having 1-18 carbon atoms, an aryl group or a substituted aryl group having 6-18 carbon atoms, and a hydroxy group, wherein a substituent group in the substituted aryl group having 6-18 carbon atoms is at least one selected from the group consisting of an alkyl group, a hydroxyalkyl group, an alkoxy group, a halogen, a carboxyl group, and an aldehyde group.

6. The boron-containing quantum dot composite aggregate according to any one of claims 1-5, wherein R₈ and R₉ are each independently selected from the group consisting of a hydroxyl group, an alkoxy group having 1-18 carbon atoms, an alkyl group having 1-18 carbon atoms, and an aryl group or a substituted aryl group having 6-18 carbon atoms, wherein when R₈ or R₉ is selected from a substituted aryl group having 6-18 carbon atoms, then a substituent group in the substituted aryl group is at least one selected from the group consisting of an alkyl group, a hydroxyalkyl group and a halogen; and
R₁₀, R₁₁, R₁₂, and R₁₃ are each independently selected from the group consisting of a hydroxyl group, an alkoxy group having 1-18 carbon atoms, an alkyl group having 1-18 carbon atoms, and an aryl group or a substituted aryl group having 6-18 carbon atoms, wherein when R₁₀, R₁₁, R₁₂ or R₁₃ is selected from a substituted aryl group having 6-18 carbon atoms, then a substituent group in the substituted aryl group is at least one selected from the group consisting of an alkoxy group, a hydroxyalkyl group, an alkyl group and a halogen.

7. The boron-containing quantum dot composite aggregate according to any one of claims 1-6, wherein the tricoordinate boron-containing quantum dot composite is at least one selected from the group consisting of: 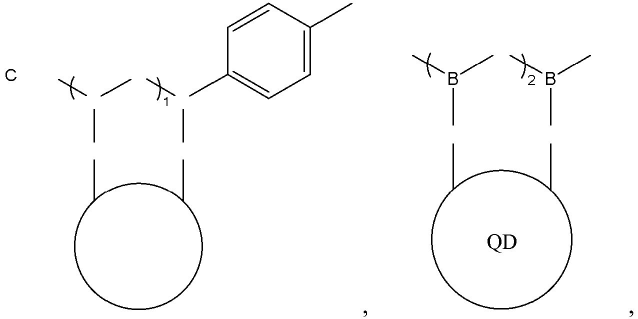 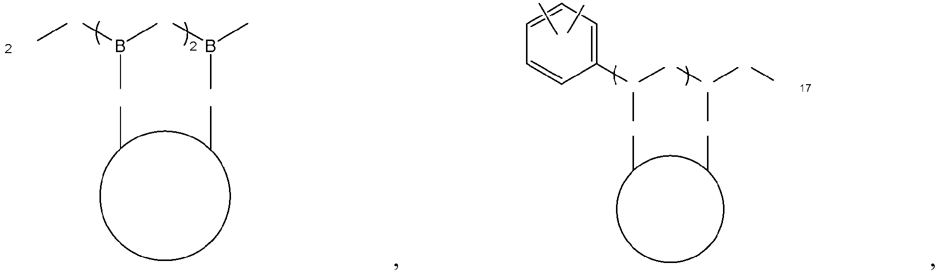 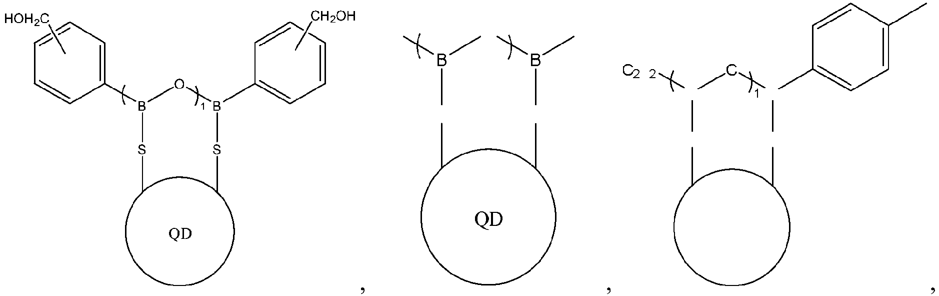 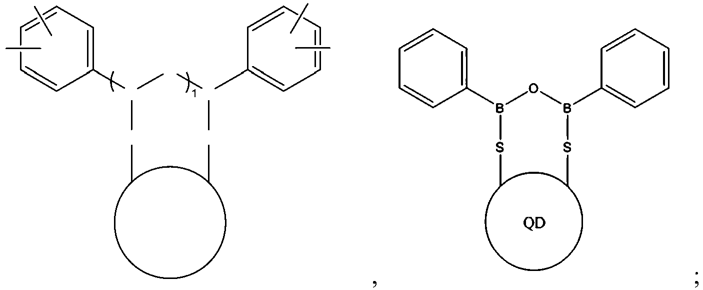 and the tetracoordinate boron-containing quantum dot composite is at least one selected from the group consisting of:

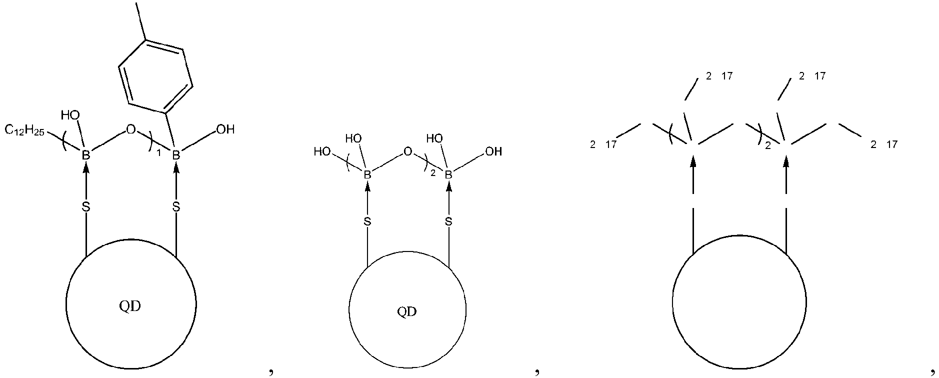

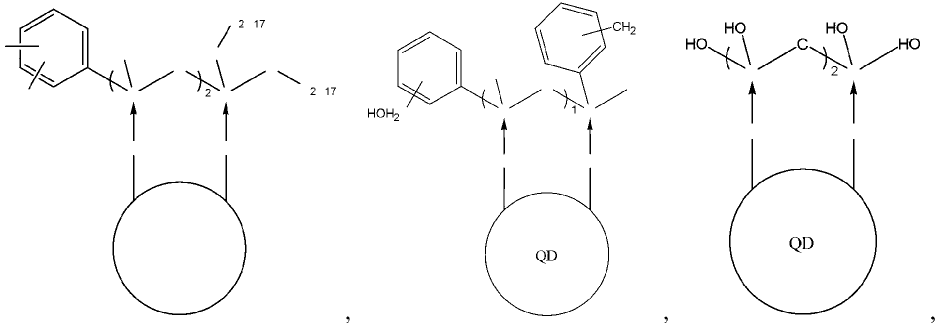

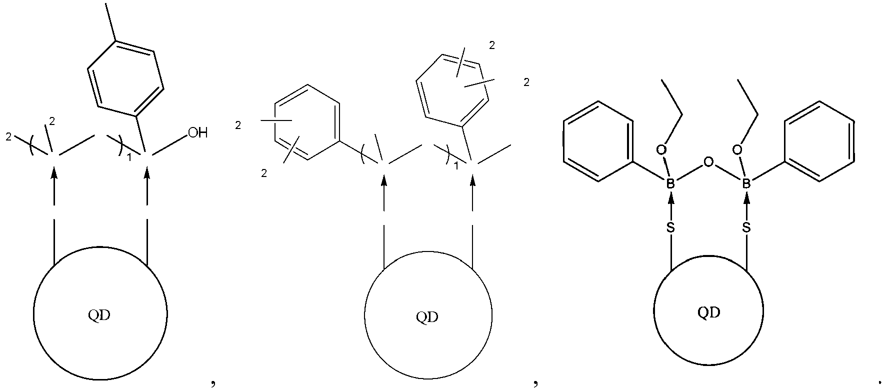

8. The boron-containing quantum dot composite aggregate according to any one of claims 1-7, wherein the quantum dots are of a bare-core structure, and a surface of the bare-core structure has at least one of group IVA atom, group VA anion, and group VIA anion.

9. The boron-containing quantum dot composite aggregate according to any one of claims 1-8, wherein the quantum dots are of a core-shell structure, and a surface of a shell layer of the core-shell structure has at least one of group IVA atom, group VA anion, and group VIA anion.

10. A preparation method for a boron-containing quantum dot dispersion liquid, **characterized by** comprising following steps:
S1, preparing a boron-containing compound and a dispersion solvent;
S2, adding quantum dots into a system of the boron-containing compound and the dispersion solvent, and introducing an inert gas;
S3, heating, mixing and dispersing the system obtained in S2, and carrying out heat preservation reaction, in which period, forming a tricoordinate boron-containing quantum dot composite and a tetracoordinate boron-containing quantum dot composite by reacting the boron-containing compound with the quantum dots, wherein the boron-containing compound in the tricoordinate boron-containing quantum dot composite is linked to the quantum dots by covalent bonds, the boron-containing compound in the tetracoordinate boron-containing quantum dot composite is linked to the quantum dots by coordination bonds, and a proportion of the number of X-B coordination bonds in the boron-containing quantum dot dispersion liquid is 0.10%-50% of a sum of the number of X-B coordination bonds and the number of X-B covalent bonds, where X is selected from X₁, X₂, X₃, X₄, X₅, and X₆; and
S4, cooling,
wherein in S3, a chemical general formula of the tricoordinate boron-containing quantum dot composite is Formula I as follows, and a chemical general formula of the tetracoordinate boron-containing quantum dot composite is Formula II as follows: 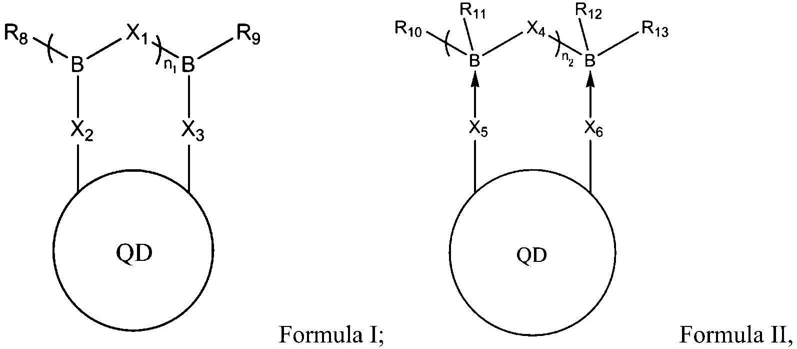
wherein in Formula I and Formula II, QD is a quantum dot; R₈, R₉, R₁₀, R₁₁, R₁₂, and R₁₃ are each independently selected from the group consisting of an alkoxy group, a hydrocarbyl group, a substituted hydrocarbyl group, a halogen, a carboxyl group, a hydroxyl group, an aldehyde group, an ester group, and an amide group, a substituent group in the substituted hydrocarbyl group is at least one selected from the group consisting of a halogen, a hydroxyalkyl group, an alkyl group, a hydroxyl group, an alkoxy group, a carboxyl group, an aldehyde group, an ester group, and an amide group, n₁=natural number, n₂=natural number, and X₁, X₂, X₃, X₄, X₅, and X₆ are each independently selected from the group consisting of a group VIA element, a group VA element, and a group IVA element.

11. The preparation method for the boron-containing quantum dot dispersion liquid according to claim 10, wherein a content of a boron element in the boron-containing quantum dot dispersion liquid is 1000 ppm-9000 ppm.

12. The preparation method for the boron-containing quantum dot dispersion liquid according to claim 10 or 11, wherein a mass ratio of the quantum dots to the boron-containing compound in S2 is 1:0.25-5, and/or a mass ratio of the boron-containing compound to the dispersion solvent in S1 is 0.01-0.5:1.

13. The preparation method for the boron-containing quantum dot dispersion liquid according to any one of claims 10-12, wherein the dispersion solvent in S1 comprises at least one selected from the group consisting of an alkane, an aromatic hydrocarbon, an organic amine, octadecene, an organic carboxylic acid containing 1-18 carbon atoms, a liquid paraffin, an acrylic ester, an organosilane, and an organophosphine;
and/or in S3, a reaction temperature of the heat preservation reaction is higher than a melting point of the system of the boron-containing compound and the dispersion solvent, and lower than a boiling point of the system of the boron-containing compound and the dispersion solvent, a reaction time is 0.1 h-3 h, and a stirring speed of the mixing and dispersing is 100 rpm-300 rpm.

14. The preparation method for the boron-containing quantum dot dispersion liquid according to any one of claims 10-13, wherein when a proportion of the covalent bonds needs to be increased, a reaction temperature in S3 is controlled to be 100 °C-300 °C; and when a proportion of the coordination bonds needs to be increased, the reaction temperature in S3 is controlled to be 30 °C-100 °C and not equal to 100 °C.

15. The preparation method for the boron-containing quantum dot dispersion liquid according to any one of claims 10-14, wherein the quantum dots are of a core-shell structure or a bare-core structure, the quantum dots are present in a form of solid or concentrate, and a mass fraction of a solid content of the quantum dots in the concentrate is 5%-50%.

16. The preparation method for the boron-containing quantum dot dispersion liquid according to any one of claims 10-15, wherein the boron-containing compound comprises at least one of corresponding compounds of following three general formulas and dehydration condensation, esterification, and amidation derivative compounds thereof:
General Formula I, 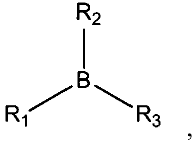 where R₁, R₂, and R₃ are each independently selected from the group consisting of a hydrocarbyl group, an alkoxy group, a halogen, and a substituted hydrocarbyl group;
General Formula II, 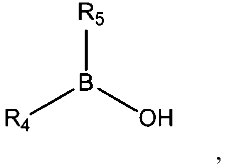 where R₄ and R₅ are each independently selected from the group consisting of a carboxyl group, a substituted hydrocarbyl group, a halogen, a hydrocarbyl group, an alkoxy group, and a hydroxyl group; and
General Formula III, 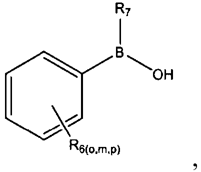 where R₆ is selected from H or the group consisting of a substituted hydrocarbyl group, a halogen, an aldehyde group, and a carboxyl group, and R₇ is selected from the group consisting of a hydrocarbyl group, an alkoxy group, a hydroxyalkyl group, and a hydroxyl group, wherein
in the three general formulas, substituent groups in the substituted hydrocarbyl groups are each independently at least one selected from the group consisting of a halogen, a hydroxyl group, an alkoxy group, a carboxyl group, an aldehyde group, an ester group, and an amide group.

17. The preparation method for the boron-containing quantum dot dispersion liquid according to any one of claims 10-16, wherein the boron-containing compound at least comprises General Formula III;
and/or the number of carbon atoms of any carbon-containing group in General Formula I, General Formula II and General Formula III is 18 or below, wherein the hydrocarbyl group is selected from the group consisting of an alkyl group, an aryl group, an alkenyl group, and an alkynyl group.

18. A boron-containing quantum dot dispersion liquid, **characterized by** being prepared by the preparation method for the boron-containing quantum dot dispersion liquid according to any one of claims 10-17.

19. A preparation method for a boron-containing quantum dot composite plate, **characterized by** comprising following steps:
S101, providing a boron-containing compound, a quantum dot concentrate, a polymer granular material, and a plate functional aid;
S102, mixing the quantum dot concentrate with at least part of the polymer granular material to render a quantum dot polymer mixture; and
S103, subjecting the quantum dot polymer mixture, the boron-containing compound, and the plate functional aid to melt extrusion to form the boron-containing quantum dot composite plate, in which period, forming a tricoordinate boron-containing quantum dot composite and a tetracoordinate boron-containing quantum dot composite by reacting the boron-containing compound with the quantum dots, wherein the boron-containing compound in the tricoordinate boron-containing quantum dot composite is linked to the quantum dots by covalent bonds, the boron-containing compound in the tetracoordinate boron-containing quantum dot composite is linked to the quantum dots by coordination bonds, and a proportion of the number of X-B coordination bonds in the boron-containing quantum dot composite plate is 0.10%-50% of a sum of the number of X-B covalent bonds and the number of X-B coordination bonds, where X is selected from X₁, X₂, X₃, X₄, X₅, and X₆, wherein
in S3, a chemical general formula of the tricoordinate boron-containing quantum dot composite is Formula I as follows, and a chemical general formula of the tetracoordinate boron-containing quantum dot composite is Formula II as follows: 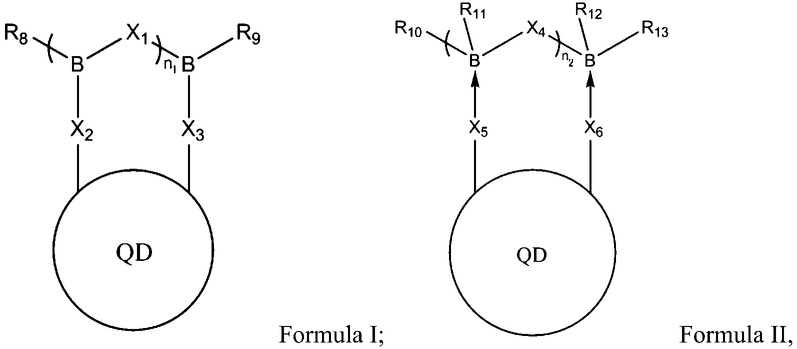
wherein QD is a quantum dot; R₈, R₉, R₁₀, R₁₁, R₁₂, and R₁₃ are each independently selected from the group consisting of an alkoxy group, a hydrocarbyl group, a substituted hydrocarbyl group, a halogen, a carboxyl group, a hydroxyl group, an aldehyde group, an ester group, and an amide group, a substituent group in the substituted hydrocarbyl group is at least one selected from the group consisting of a halogen, a hydroxyalkyl group, an alkyl group, a hydroxyl group, an alkoxy group, a carboxyl group, an aldehyde group, an ester group, and an amide group, n₁=natural number, n₂=natural number, and X₁, X₂, X₃, X₄, X₅, and X₆ are each independently selected from a group consisting of a group VIA element, a group VA element, and a group IVA element.

20. The preparation method for the boron-containing quantum dot composite plate according to claim 19, wherein a content of a boron element in the boron-containing quantum dot composite plate is 13 ppm-1750 ppm;
and/or a mass ratio of the quantum dots to a total amount of the boron-containing compound is 1:(0.5-40), and a mass of the boron-containing compound in the total amount of the boron-containing compound, which is used for coordination binding to other lone pair electron or conjugated electron donors except the quantum dots in raw materials, is 1.2%-1000% of a mass of the quantum dots.

21. The preparation method for the boron-containing quantum dot composite plate according to claim 19 or 20, wherein a process of the melt extrusion in S103 comprises: subjecting the boron-containing compound, an antioxidant, a photostabilizer, and the other part of the polymer granular material to second mixing extrusion to render an aid granular material; then feeding the quantum dot polymer mixture and the aid granular material into a first extruder, feeding a diffusion agent and a toughener into a second extruder and a third extruder respectively, and then performing melt extrusion, wherein a temperature of the second mixing extrusion is 180 °C-220 °C.

22. The preparation method for the boron-containing quantum dot composite plate according to any one of claims 19-21, wherein a condition of the melt extrusion in S103 comprises: a processing temperature of 210 °C-270 °C and a reaction time of 1-2 min;
and/or a stirring speed of first mixing in S102 is 300-700 rpm.

23. The preparation method for the boron-containing quantum dot composite plate according to any one of claims 19-22, wherein the boron-containing quantum dot composite plate is a boron-containing quantum dot optical diffuser plate, and corresponding plate functional aid comprises at least one selected from the group consisting of an antioxidant, an optical diffusion agent, a toughener, and a photostabilizer; the quantum dots comprise red quantum dots and/or green quantum dots, and the polymer granular material is selected from the group consisting of polystyrene, polymethyl methacrylate, polycarbonate, polyethylene, and polypropylene, wherein a thickness of the boron-containing quantum dot composite plate is 1.2 mm-3.0 mm;
and/or in S101, based on a total amount of raw materials, a mass fraction of the boron-containing compound is 0.05%-1%, a mass fraction of the quantum dot concentrate is 0.05%-0.2%, a mass fraction of the quantum dots in the quantum dot concentrate is 5%-50%, a mass fraction of the antioxidant is 0.1%-2%, a total mass fraction of the optical diffusion agent and the toughener is 0.5%-2%, and a mass fraction of the photostabilizer is 0.05%-2%.

24. The preparation method for the boron-containing quantum dot composite plate according to any one of claims 19-23, wherein the boron-containing compound comprises at least one of corresponding compounds of following three general formulas and dehydration condensation, esterification, and amidation derivative compounds thereof:
General Formula I, 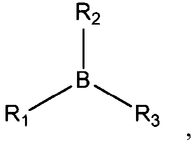 where R₁, R₂, and R₃ are each independently selected from the group consisting of a hydrocarbyl group, an alkoxy group, a halogen, and a substituted hydrocarbyl group;
General Formula II, 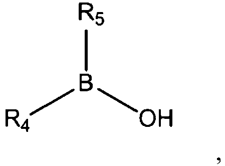 where R₄ and R₅ are each independently selected from the group consisting of a carboxyl group, a substituted hydrocarbyl group, a halogen, a hydrocarbyl group, an alkoxy group, and a hydroxyl group; and
General Formula III, 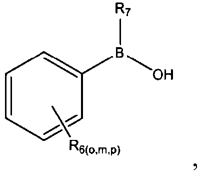 where R₆ is selected from H or the group consisting of a substituted hydrocarbyl group, a halogen, an aldehyde group, a carboxyl group, and a hydroxyalkyl group, and R₇ is selected from the group consisting of a hydrocarbyl group, an alkoxy group, a hydroxyalkyl group, and a hydroxyl group, wherein
in the three general formulas, substituent groups in the substituted hydrocarbyl groups are each independently at least one selected from the group consisting of a halogen, a hydroxyalkyl group, an alkyl group, a hydroxyl group, an alkoxy group, a carboxyl group, an aldehyde group, an ester group, and an amide group.

25. The preparation method for the boron-containing quantum dot composite plate according to any one of claims 19-24, wherein the boron-containing compound at least comprises General Formula III;
and/or the number of carbon atoms of any carbon-containing group in General Formula I, General Formula II, and General Formula III is 18 or below, wherein the hydrocarbyl group is selected from the group consisting of an alkyl group, an aryl group, an alkenyl group, and an alkynyl group.

26. A boron-containing quantum dot composite plate, **characterized by** being prepared by the preparation method for the boron-containing quantum dot composite plate according to any one of claims 19-25.

27. Use of the boron-containing quantum dot composite aggregate according to any one of claims 1-9 in a quantum dot diffuser plate, a quantum dot light-conversion agricultural film, quantum dot On-chip package, and a quantum dot electroluminescent device.
